# EUROPÄISCHE PATENTSCHRIFT

(11) **EP 0 988 766 B1**
(45) Veröffentlichungstag und Bekanntmachung des Hinweises auf die Patenterteilung: **17.08.2005**
(21) Anmeldenummer: 98934937.8
(22) Anmeldetag: 09.06.1998
(51) Int. Cl.: H04Q 7/38, H04Q 3/00

(54) **VERFAHREN UND ANORDNUNG ZUM ANSCHLUSS VON TEILNEHMERN IN MEHREREN TELEKOMMUNIKATIONSNETZEN UNTER EINER RUFNUMMER**
METHOD AND SYSTEM FOR CONNECTING SUBSCRIBERS PARTICIPATING IN SEVERAL TELECOMMUNICATION NETWORKS UNDER ONE TELEPHONE NUMBER
PROCEDE ET SYSTEME POUR LE RACCORDEMENT D'ABONNES A PLUSIEURS RESEAUX DE TELECOMMUNICATION SOUS UN NUMERO D'APPEL

(30) Priorität: 09.06.1997 DE 19724122
(43) Veröffentlichungstag der Anmeldung: 29.03.2000
(73) Patentinhaber: T-Mobile Deutschland GmbH, 53227 Bonn (DE); Deutsche Telekom AG, 53113 Bonn (DE)
(72) Erfinder: LJUNGSTRÖM, Patrik, D-53639 Königswinter (DE); GOTTSCHALK, Hubertus, D-64560 Riedstadt (DE)
(74) Vertreter: Riebling, Peter, Dr.-Ing.
(86) Internationale Anmeldenummer: PCT/EP1998/003448
(87) Internationale Veröffentlichungsnummer: WO 1998/057515

(56) Entgegenhaltungen:
- EP-A- 0 738 093
- JONES D R: "AIN NETWORK CAPABILITIES FOR WIRELESS/WIRELINE INTEGRATION" ANNUAL REVIEW OF COMMUNICATIONS, Bd. 50, 1997, Seiten 923-930, XP000720958
- KOLIPAKAM M V ET AL: "PERSONAL COMMUNICATIONS SERVICES USING THE INTELLIGENT NETWORK" INTELLIGENT NETWORKS: THE PATH TO GLOBAL NETWORKING, PROCEEDINGS OF THE INTERNATIONAL COUNCIL FOR COMPUTER COMMUNICATION INTELLIGENT NETWORKS CONFERENCE, TAMPA, MAY 4 - 6, 1992, 4. Mai 1992, Seiten 384-390, XP000684033 BAYLISS P W (ED )

## Beschreibung

Die Erfindung betrifft ein Verfahren und eine Anordnung zum Anschluß von Teilnehmern in mehreren Telekommunikationsnetzen unter einer Rufnummer.

Telekommunikation wird heute zum einen über leitungsgebundene Telekommunikationsnetze, sogenannte Festnetze, und zum anderen über nichtleitungsgebundene Telekommunikationsnetze, sogenannte Mobilfunknetze, abgewickelt.

Dabei besteht das Bedürfnis, daß ein Teilnehmer, egal über welches Netz er telefoniert, unter einer einzigen Rufnummer erreichbar ist. Zwar bieten moderne Telekommunikationsnetze die Möglichkeit einer Rufumleitung, d.h. Anrufe für den Teilnehmer, die z.B. über das Mobilfunknetz eintreffen können auf eine vorher definierte Rufnummer des Festnetzes umgeleitet werden, jedoch stellt diese Rufumleitung keine echte Erreichbarkeit des Teilnehmers unter einer einzigen Rufnummer dar.

Damit ist auch der Nachteil verbunden, daß der Teilnehmer die Rufumleitung bei Bedarf jedesmal einrichten und bei Nichtbedarf wieder löschen muß. Ferner muß für die Rufumleitung immer die aktuelle Rufnummer eingegeben werden, auf die der Anruf umgeleitet werden soll. Wechselt der Teilnehmer seinen Aufenthaltsort oder wünscht er eine Rufumleitung zu einer anderen Rufnummer muß er diese jedesmal neu einrichten.

Aus dem Artikel von Jones, D.R.: "AlN Network Capabilities for Wireless/Wireline Integration", in: Annual Review of Communications, Bd. 50, 1997, Seiten 923-930, ist ein Verfahren zum Anschluß von Teilnehmern in mehreren Telekommunikationsnetzen bekannt, wobei dem Teilnehmer eine Rufnummer zugeteilt ist, unter welcher er erreichbar ist. Dabei kann eines der Telekommunikationsnetze ein Mobilfunknetz und ein weiteres Telekommunikationsnetz ein digitales, Intelligentes Festnetz sein. Es wird hierbei ein sogenannter Follow-Me-Service eingerichtet, bei dem jedoch keine Erweiterung des Festnetzes um Mobilitätsfunktionen erfolgt. Die Follow-Me-Funktion wird durch netzexterne Einrichtungen realisiert und die beschriebenen Funktionen entsprechen den bekannten Rufumleitungen zwischen mehreren Rufnummern in den beteiligten Kommunikationsnetzen.
Ein ähnlicher Ansatz ist im Artikel von Kolipakam, M.V. et al.: "Personal Communications Services Using the Intelligent Network" in: Intelligent Networks, The Path to Global Networking, Proceedings of the International Council for Computer Communication Intelligent Networks Conference, Tampa, May 4-6, 1992, Seiten 384-390 beschrieben. Auch hier ist keine echte Integration des Festnetzes in das Mobilitätsmanagement des Mobilfunknetzes vorgesehen.

Die EP-A-0 738 093 betrifft ein Kommunikationssystem, in welchem ein Teilnehmer unter einer einzigen persönlichen Rufnummer erreichbar ist. Hierbei bleiben jedoch die alten Netzstrukturen erhalten, das heißt es besteht jeweils ein Teilnehmerverhältnis pro angeschlossenem Kommunikationsnetz mit jeweils einer eigenen netzinternen Rufnummer. Das beschriebene Verfahren nimmt keinen Einfluß auf bestehende Kommunikationsnetze, insbesondere wird kein echtes Mobilitätsmanagement basierend auf einer einheitlichen Datenbank realisiert.

Die Aufgabe der Erfindung besteht darin, ein Verfahren und eine Anordnung zum Anschluß von Teilnehmern in mehreren Telekommunikationsnetzen unter einer Rufnummer anzugeben, mit dem Ziel, daß der Teilnehmer automatisch an seinem jeweiligen Aufenthaltsort unter seiner Rufnummer erreichbar ist.

Diese Aufgabe wird durch die in den unabhängigen Patentansprüchen angegebenen Merkmale gelöst.

Vorteil der Erfindung ist, daß nun, wie im Mobilfunknetz, auch im beteiligten Festnetz ein Mobilitätsmanagement möglich ist, d.h. der Teilnehmer ist auch über das Festnetz unter der jeweiligen, seinem Aufenthaltsbereich zugeordneten Rufnummer erreichbar. Damit ist ferner der Vorteil verbunden, daß wann immer möglich eine Kommunikation über das Festnetz abgewickelt wird, um so z.B. Verbindungskosten zu sparen und alle Vorzüge der Kommunikation über das Festnetz, z.B. höhere Sprachqualität und Übertragungsraten, nutzen zu können.

Die wesentlichen Teilnehmerdaten werden in einer Heimatdatenbank verwaltet, wobei in einer ersten Ausführungsform vorgesehen ist, daß die Heimatdatenbank die Aufgaben eines Heimatregisters (HLR) und eines Intelligenten Netzwerksystems (INS) übernimmt.
Das Heimatregister (HLR) und das Intelligente Netzwerksystem (INS) sind dabei vorzugsweise nicht miteinander gekoppelt und übernehmen getrennte Funktionen, und beide kommunizieren über eine MAP-Schnittstelle sowohl mit den Vermittlungsstellen des Mobilfunknetzes als auch mit den Vermittlungsstellen des Festnetzes

Um eine Koppelung der Telekommunikationsnetze zu ermöglichen muß das Teilnehmerprofil des Heimatregister (HLR) und der Besucherregister (VLR) des Mobilfunknetzes derart erweitert werden, daß die vorhandenen Dienste des Festnetzes abbildbar sind. Zusätzlich werden die Funktionen des Mobilitätsmanagement des Mobilfunknetzes auf das Festnetz ausgeweitet. In den Vermittlungsstellen der Telekommunikationsnetze ist jeweils eine Besucherdatenbank (VDB) angeordnet, die mit der Heimatdatenbank (HDB) kommuniziert, und in der relevante Teile der Teilnehmerdaten temporär verwaltet werden.

Ferner erfolgt die Signalisierung zwischen den Endgeräten und den Vermittlungsstellen des Festnetzes über einen um Mobilitätsfunktionen erweiteten Steuerkanal (D-Kanal). Eine MAP-Implementierung mit Interworking zum α-Interface erfolgt in den Vermittlungsstellen des Festnetzes.
Wichtig für die Durchführung des Mobilitätsmanagements ist, daß beim Einbuchen über das Festnetz über die MAP Signalisierung der Aufenthaltsort des Teilnehmers an die Heimatdatenbank übermittelt und dort registriert wird.

Als Endgerät für die Kommunikation über das Mobilfunknetz als auch über das Festnetz dient ein Mobilfunkendgerät. Der Anbindung des Mobilfunkendgerätes des Teilnehmers an das Festnetz kann dabei über Home Base Stations erfolgen, oder über eine Schnurlos-Basisstation. Das verwendete Mobilendgerät unterstützt entweder nur den GSM-Standard, oder, als sogenanntes Dual-Mode-Endgerät, den GSM-Standard und den DECT-Standard.

In einer weiteren Ausführungsform ist die Heimatdatenbank (HDB) als ein Knoten mit einer Heimatdatenbank-Funktion (HLF) und eine Dienstesteuerungsfunktion (SCF) ausgebildet, wobei dieser Knoten als Dienstedatenbank-Knoten (SDP) bezeichnet wird. Im Unterschied zur Ausführungsform mit HLR und INS werden im Dienstedatenbank-Knoten SDP die Funktionen des HLR und INS durch die Heimatdatenbank-Funktion HLF und Dienstesteuerungsfunktion SCF nachgebildet.

Im folgenden werden Beispiele für Architekturen zur Realisierung eines Personal Communication Services (PCS) anhand von Zeichnungen näher erläutert. Dabei gehen aus den Zeichnungen und ihrer Beschreibung weitere Merkmale und Vorteile der Erfindung hervor. Dabei zeigt:
Figur 1: eine generelle Darstellung der erfindungsgemäßen Anordnung;
Figur 2: schematische Darstellung einer ersten Ausführungsform der Erfindung unter Verwendung eines HLR und eines INS als Heimatdatenbank;
Figur 3: Darstellung der Abfrage des HLR bei eingehendem Anruf;
Figur 4: Darstellung der Abfrage des HLR und INS bei eingehendem Anruf;
Figur 5: schematische Darstellung einer weiteren Ausführungsform der Erfindung unter Verwendung eines SDP als Heimatdatenbank;
Figur 6: Darstellung der Abfrage des SDP bei eingehendem Anruf;
Figur 7: schematische Darstellung einer dritten Ausführungsform der Erfindung mit Koppelung zwischen INS und HLR;
Figur 8: Darstellung der Integration des INS und HLR zu einer Teilnehmerdatenbank HDB in einem Knoten;
Figur 9: Behandlung der Verbindung in den Vermittlungsstellen unter Beihilfe des INS;
Figur 10: Behandlung der Verbindung in den Vermittlungsstellen unter direkten Einbezug der INS;
Figur 11: Schematischer Ablauf der Einrichtung und Veränderung der Teilnehmerdaten in den Netzknoten;
Figur 12: schematische Darstellung einer vierten Ausführungsform der Erfindung mit der Integration des INS und HLR zu einer Teilnehmerdatenbank HDB in einem Knoten;
Figur 13: Einen Überblick über wichtige Parameter der beschriebenen vier Ausführungsformen.

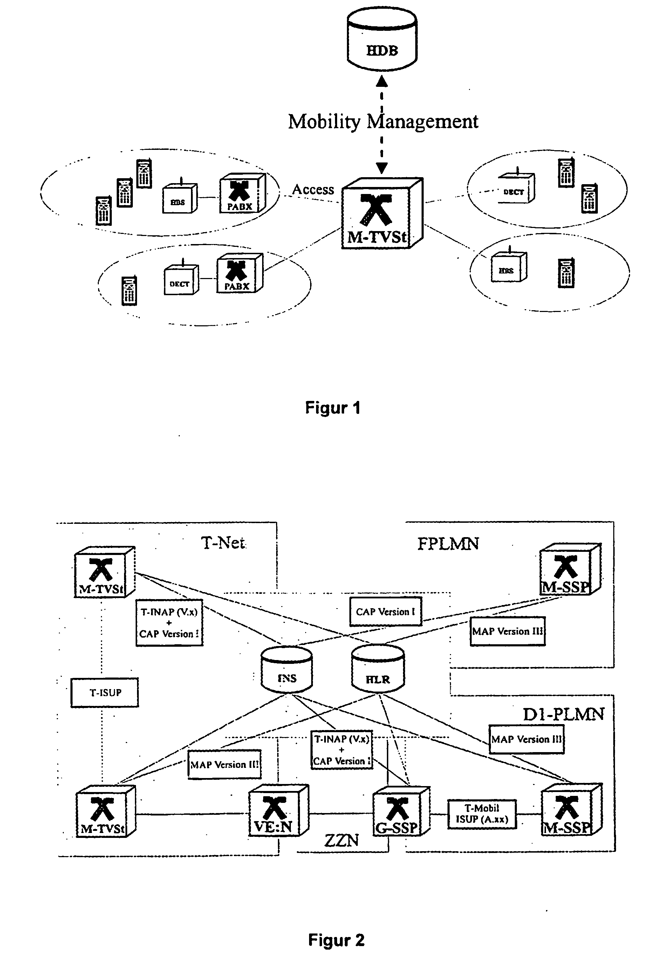

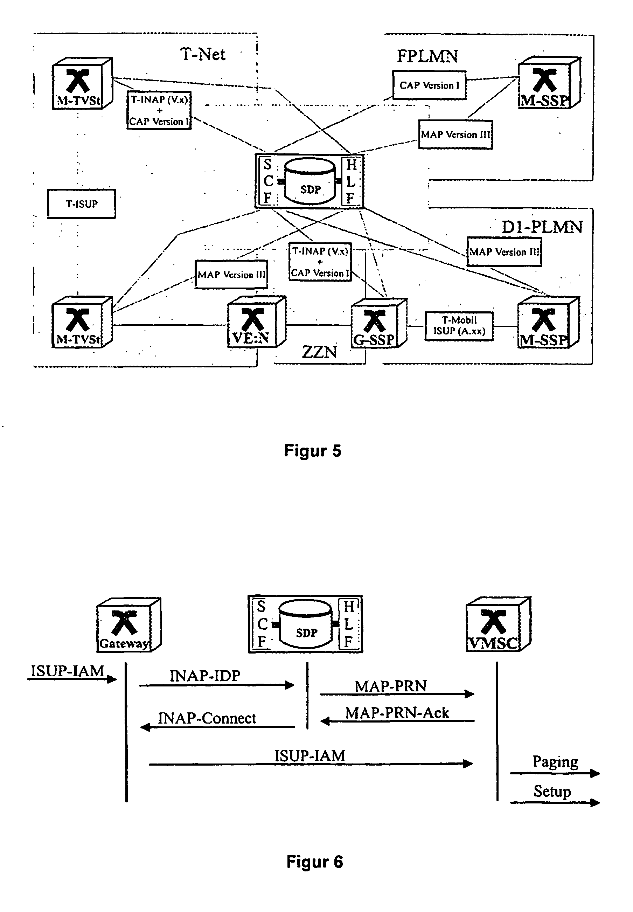

Wie in Figur 1 dargestellt ist, haben alle Ausführungsformen gemeinsam, daß für jeden Teilnehmer die wesentlichen Teilnehmerdaten in einer Heimatdatenbank HDB verwaltet werden. Je nach Realisierung besteht die Heimatdatenbank HDB aus zwei getrennten Knoten, einem Intelligenten Netzwerksystem INS und dem Heimatregister HLR des Mobilfunknetzes (Figur 2).
In einer alternativen Ausführungsform (Figur 5) ist vorgesehen, daß die Heimatdatenbank HDB aus einem einen Dienstedatenbank-Knoten SDP mit einer Dienstesteuerungsfunktion SCF und einer Heimatregisterfunktion HLF besteht. In den jeweiligen Aufenthaltsvermittlungsstellen TVSt oder (V)MSC des Teilnehmers werden relevante Teile der Teilnehmerdaten temporär in einer Besucherdatenbank VDB verwaltet. Im Falle der Mobilvermittlungsstellen (V)MSC entspricht die VDB dem VLR. Der Anschluß der Endgeräte (aus Netzsicht) in der Teilnehmervermittlungsstelle TVSt erfolgt über einem um Mobilitätsfunktionen erweiterten D-Kanal. Im folgenden wird diese Erweiterung α-Interface genannt. Die Anbindung des Mobilendgerätes erfolgt z.B. über eine Schnurlos-Basisstation DECT, wobei das Endgerät hierbei den GSM- als auch den DECT-Standard unterstützen muß. Alternativ kann ein GSM-Endgerät auch über einer Heimatfeststation HBS an das Festnetz angebunden werden.
Natürlich ist es möglich, zwischen Teilnehmervermittlungsstelle TVSt und DECT bzw. HBS eine private Nebenstelle PABX zu schalten.

### Getrenntes Intelligent Network System und HLR ohne Koppelung

In einer ersten Ausführungsform, die in Figur 2 dargestellt ist, besteht die Heimatdatenbank HDB aus einem Intelligenten Netzwerksystem INS und einem Heimatregister HLR. Eine Kopplung der Knoten ist nicht notwendig, da die Knoten getrennte Funktionen übernehmen. Das HLR ist zentraler Punkt für das Mobilitätsmanagement und verwaltet das Teilnehmerprofil für klassische ISDN/GSM-Dienste. Für spezielle Dienste ist Steuerung durch das INS möglich. Die dafür notwendigen Triggerpunkte sind optionaler Bestandteil der Teilnehmerprofile.
Zur Umsetzung der Architektur ist eine MAP-Implementierung mit Interworking zum α-Interface in den TVStn notwendig.
Die Signalisierungsdaten zwischen dem Intelligenten Netzwerksystem und dem Heimatregister HLR und den Mobilfunk-Vermittlungsstellen M-SSP sowie den Festnetz-Vermittlungsstellen M-TVSt werden über die MAP-Schnittstelle übertragen. Der Gesprächsauf- und -abbau und die Kommunikation zwischen den Vermittlungsstellen erfolgt über ISUP.
Die Anbindung der Mobilfunknetze FPLMN und PLMN an das Festnetz T-Net erfolgt mittels Übergangsvermittlungsstelle G-SSP bzw. VE:N.

### Subskription und teilnehmerspezifische Daten

### Allgemeine Dienstedaten

Das Objektmodell für das Teilnehmerprofil im HLR und VDBNLR muß so erweitert werden, daß neben den vorhandenen GSM-Diensten auch alle vorhandenen ISDN-Dienste abbildbar sind. Nach Möglichkeit sollen vorhandene GSM-Objekte auch für ISDN-Dienste wiederverwendet werden. Sofern die GSM-Objekte zur Abbildung des ISDN-Dienstes nicht ausreichen, sollen die vorhandenen Objekte erweitert werden und als *private extention* im MAP übertragen werden. ISDN-Dienste die im GSM-Objektmodell nicht vorhanden sind, können als *network specific services* eingefügt und im MAP übertragen werden. Hierfür stehen jeweils 16 Dienste für die *Kategorien Supplementary Services, Teleservices und Bearer Services* zur Verfügung.

### Mobilitätsdaten

Dienste mit Mobilitätsangeboten benötigen neben den o.g. Subskriptionen für Zusatz-, Tele- und Bearerdienste auch eine Subskription für die Mobilität. Zur Gestaltung des PCS sind für den Festnetz- und Mobilfunkbereich folgende Optionen notwendig. Die Optionen der beiden Bereich sind beliebig kombinierbar.

### Festnetz:

1. Keine Einschränkungen, d.h. der Dienst steht dem Teilnehmer an allen Anschlüssen im T-Net, die für Mobilität aufgerüstet sind, zur Verfügung.
2. Begrenzt auf TVSt, d.h. der Dienst steht dem Teilnehmer an allen Anschlüssen im Bereich einer oder mehrerer TVSten, die für Mobilität aufgerüstet sind, zur Verfügung.

Begrenzt auf Anschluß, d.h. der Dienst steht dem Teilnehmer an einem oder mehreren Anschlüssen zur Verfügung.

### Mobilfunknetz:

1. Keine Einschränkungen, d.h. der Dienst steht dem Teilnehmer im gesamten Service Bereich der T-Mobil (D1-Netz und in den Netzen aller Roaming Partner) zur Verfügung.
2. Nur Heimnetz, d.h. der Dienst steht dem Teilnehmer nur im D1-Netz zur Verfügung.
3. Regional begrenzt, d.h. der Dienst steht dem Teilnehmer nur in explizit erlaubten Regionen im Service Bereich der T-Mobil (D1-Netz und in den Netzen der Roaming Partner) zur Verfügung.

Für den Mobilfunkbereich sind die Mobilitätsoptionen heute breites durch Funktionen im HLR und VLR realisiert. Für den Festnetzbereich sind grundsätzlich zwei Alternativen möglich, um die jeweiligen Optionen zu realisieren:
1. Im HLR sind keine Mobilitätsprofile für den Festnetzbereich abgelegt. Statt dessen wird in den TVSten pro Anschluß eine *Black- oder Whitelist* der nichtberechtigten bzw. berechtigen Teilnehmer verwaltet.
2. Im HLR wird die Berechtigung für einzelne Anschlüsse oder einzelne TVSten verwaltet *(Black- oder Whitelist)* und ggf. zum VDB/VLR übermittelt. Eventuell kann die für den GSM-Standard definierte Regional Subscription Lösung für diese Anwendung verwendet oder erweitert werden.
Bevorzugt wird eine Lösung entsprechend Alternative 2, da dies den administrativen Aufwand in der TVSt minimiert und somit die Bereitstellung des Dienstes für den Teilnehmer beschleunigt.

### Heimatanschluß

Grundsätzlich sollen zwei Arten der Rufnummer dem PCS-Teilnehmer alternativ angeboten werden:
1. Servicerufnummer
2. Klassische Rufnummer aus dem Ortsnetz (Ortsnetzrufnummer)

Bei Verwendung der Servicerufnummer ist die Definition eines Heimanschlusses nicht notwendig. Im Gegensatz dazu muß jedoch bei Verwendung einer Ortsnetzrufnummer pro Teilnehmer ein Heimatanschluß eingerichtet werden. In der entsprechenden TVSt muß teilnehmerspezifisch zu der Ortsnetzrufnummer die jeweilige HLR-Addresse administriert werden.

### IN-Trigger und IN-Teilnehmerdaten

Dienste, die über das Angebot der GSM- bzw. ISDN-Dienste hinausgehen können den Teilnehmer optional als teilnehmerspezifische IN-Dienste angeboten werden. Zur Ansteuerung dieser Dienste sind z.B. *Initial Detection Points, Service Key* und SCP-Addresse (IN-Trigger) notwendig. Zu unterscheiden sind Dienste die für ankommende Rufe (PTC, *PCS Terminating Call*) bzw. abgehende Rufe (POC, *PCS Originating Call*) relevant sind; es sind jeweils unterschiedliche IN-Trigger notwendig.

Die IN-Trigger für POC sind optionaler Bestandteil der Teilnehmerdaten im HLR und VDB/VLR. Die Trigger werden im MAP übertragen. Dieses Prinzip ist bei PCS-Teilnehmer mit Servicerufnummer auch für die PTC-IN-Trigger notwendig. Bei PCS-Teilnehmer mit Ortsnetzrufnummer sind zwei Möglichkeiten zur Bereitstellung der PTC-IN-Trigger denkbar:
1. Der PTC-IN-Trigger ist optionaler Bestandteil der Heimatanschlußdaten und wird in der entsprechenden TVSt teilnehmerspezifisch (zusätzlich zur HLR-Addresse) administriert.
2. Die PTC-IN-Trigger ist optionaler Bestandteil der Teilnehmerdaten im HLR und VDB/VLR. Der Trigger wird im MAP übertragen.

Bevorzugt wird eine Lösung entsprechend Alternative 2, da dies den administrativen Aufwand in der TVSt minimiert und somit die Bereitstellung neuer IN-Dienste für den Teilnehmer beschleunigt und erleichtert.
Zusätzlich zu den o.g. IN-Triggern sind teilnehmerspezifischen IN-Daten im SCP notwendig. Auf diese wird jedoch hier nicht näher eingegangen.

### Prozeduren für die Mobilität

Im folgenden wird auf die Abläufe der wichtigsten Prozeduren für PCS eingegangen. Auf Prozeduren im Mobilfunkbereich wird nicht näher eingegangen, da diese durch den GSM-Standard vorgegeben sind und wegen der notwendigen Kompatibilität zu anderen GSM-Netzen außerhalb der Standardisierung nicht veränderbar sind.

### Registrierung (Location Update)

Ziel der Registrierung ist es die benötigten Daten des Teilnehmerprofils von dem HLR in das VDB/VLR zu übertragen und im HLR den aktuellen Aufenthaltsinformation bereitzustellen. Die Registrierung ist grundsätzlich an jedem mit dem α-Interface ausgestattetem Anschluß möglich. Teilnehmerindividuelle Einschränkungen können durch das Teilnehmerprofil realisiert werden.
Die Registrierung wird durch das Endgerät angestoßen. Das Endgerät identifiziert sich in der Anforderung für die Registrierung gegenüber dem Netz mit der IMSI oder der TMSI. Zur Authentisierung wird das im GSM-Standard verwendete Verfahren verwendet. Es sind vier Arten der Registrierung zu unterscheiden:
1. Einbuchen eines Endgeräts an einem **neuen Access** im Bereich einer **neuen VDB/VLR**:
   Bei GSM Mobilstationen wird durch den Vergleich der auf der SIM gespeicherten *Location Area* mit der von dem *Broadcast Channel* ausgestrahlten *Location Area* die Notwendigkeit für ein Location Update erkannt. Eine vergleichbare Funktion muß für das α-Interface entwickelt werden.
   Da in diesem Fall der Teilnehmer nicht in dem VDB/VLR der TVSt registriert ist, verlängert das VDB/VLR die Anfrage zum HLR. Das zuständige HLR wird anhand der IMSI ermittelt (GTT nach ITU-T E.212). Je nach gewählter Alternative für die Mobilitätsoptionen im Festnetz, wird die Zulässigkeit der angeforderten Registrierung in der TVSt oder im HLR (für einzelne Anschlüsse nach Übertragung des Profils im VDB/VLR) überprüft. Dem HLR wird die E.164-Nummer der TVSt als MSC- und VLR-Nummer übermittelt. Vor Abschluß der Registrierung wird das notwendige Teilnehmerprofil in das VDB/VLR übertragen. Das VDB/VLR speichert den aktuellen Anschluß des Teilnehmer.
2. Einbuchen eines Endgeräts an einem **neuen Access** im Bereich des **alten VDBNLR:**
   Wie in Punkt 1.) erkennt das Endgerät die Notwendigkeit einer neuen Registrierung.
   Da in diesem Fall der Teilnehmer bereits in dem VDB/VLR registriert ist, wird die Registrierung ohne Beteiligung des HLR ausgeführt. In dem VDB/VLR wird je nach gewählter Alternative anhand der fest gespeicherten Daten oder der in dem dynamischen Profil enthaltenen Daten die Zulässigkeit der angeforderten Registrierung für diesen Anschluß überprüft. Das VDB/VLR speichert den aktuellen neuen Anschluß des Teilnehmers.
3. Anmelden des Endgeräts am **alten Access** nach ***IMSI-Detach:***
   Im VDBNLR wird das *ATT-Flag* auf *attached* gesetzt.
4. Nach Ablauf des *Periodic Location Update Timers* in dem Endgerät:
   In GSM-Endgeräten wird nach Ablauf eines *Periodic Location Update Timers* prophylaktisch eine periodische Registrierung initiiert. Der Startwert des Timers wird über den *Broadcast Channel* ausgestrahlten. Nach jeder Kommunikation zwischen Netz und Endgerät wird der Timer neu gestartet. Diese Prozedur ist wesentlicher Bestandteil der Implicit Detach Prozedur des VDBNLR (Teilnehmer wird automatisch gedetached wenn ein teilnehmerspezifischer Timer im VDBNLR abläuft, der Timer wird nach jeder Kommunikation zwischen Netz und Endgerät neu gestartet). Darüber hinaus wird die Prozedur zur Beseitigung von Inkonsistenten der Dateien verwendet. Eine vergleichbare Funktion muß deshalb auch für das α-Interface entwickelt werden.
   Je nach Datenstand des VDBNLR führt die periodische Registrierung zu den in Punkt 1.) bis 3.) genannten Aktionen.
Nach erfolgreicher Registrierung erfolgt eine temporäre Zuordnung des Teilnehmer, d.h. der IMSI zu dem physikalischen Anschluß. Grundsätzlich können mehrere Teilnehmer zeitgleich einem physikalischen Anschluß zugeordnet werden.

### PCS Originating Call (POC)

Ein PCS Originating Call (POC) wird vom Endgerät durch eine entsprechende Aufforderung (Setup) via dem α-Interface angestoßen. Das Endgerät identifiziert sich gegenüber dem Netz mit der IMSI oder der TMSI. Zur Authentisierung wird das im GSM-Standard verwendete Verfahren verwendet.
Im VDBNLR wird die Zulässigkeit des angeforderten Calls (Subskription des Teleservices, ODB Sperren, Barring Einstellungen etc.) überprüft. Gegebenenfalls wird der Call mit dem entsprechenden Cause zurückgewiesen bzw. bei ODB zum Operator umgeleitet.
Nach erfolgreicher Überprüfung im VDBNLR wird der angeforderte Call aufgebaut. Als CallingPartyNumber wird die im VDBNLR gespeicherte Rufnummer (Basic MSISDN) des Anrufers (Ortsnetznummer oder Servicenummer) eingesetzt. Die LocationNumber wird anschlußabhängig aufgesetzt.
Wenn im VDBNLR ein IN-MOC-Trigger (optional) gesetzt ist, wird ein IN Dialog zu dem zuständigen Service Control Point (SCP) initiiert. Die SCP-Addresse (E.164 Nummer) und der ServiceKey sind Bestandteil des In-Triggers.

### PCS Terminating Call (PTC)

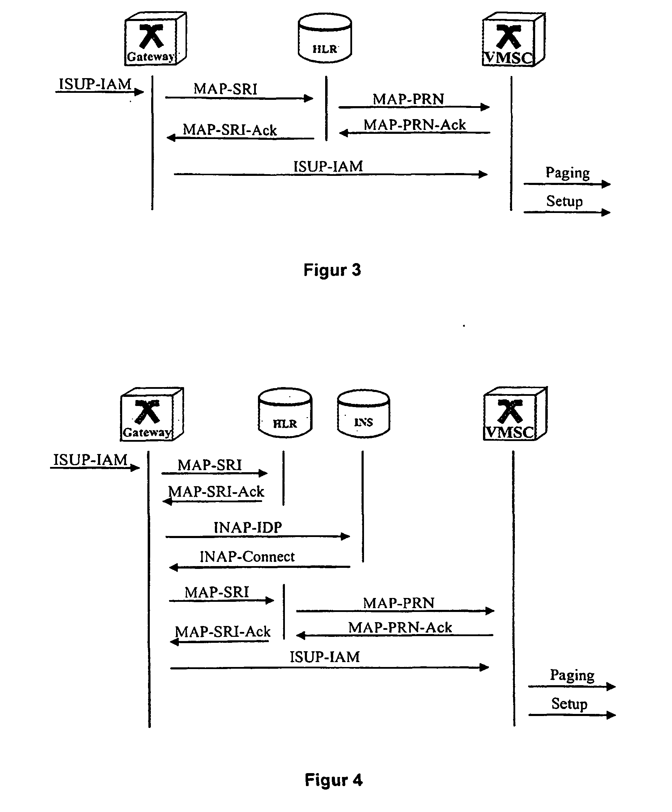

Wie in Figur 3 dargestellt ist ist bei einem PCS Terminating Call (PTC) für den Rufaufbau eine MAP Abfrage zum HLR (verlängert ins VDBNLR) notwendig. Diese Abfrage (Interrogation) wird bei Teilnehmer mit einer Ortsnetzrufnummer von der TVSt mit dem Heimatanschluß (Gateway) gestartet. Anhand der zur Rufnummer gespeicherten HLR-Number (E.164 Nummer) wird das zutändige HLR abgefragt.
Bei Teilnehmer mit einer Servicenummer kann die Interrogation in beliegigen VSten oder MSCen erfolgen (Gateway). Anhand der Servicenummer (z.B. anhand der ersten vier Ziffern nach dem NDC) erfolgt eine eindeutige Zuordnung zu dem zuständigen HLR.
Mit der Interrogation zum HLR werden alle verfügbaren Dienstedaten übermittelt. Im HLR wird die Zulässigkeit des angeforderten Calls (Subskription des Teleservices, ODB Sperren, Barring Einstellungen etc.) überprüft. Gegebenenfalls wird der Call mit dem entsprechenden Cause zurückgewiesen.
Nach erfolgreicher Überprüfung im HLR wird (sofern *Call Forwarding unconditional* **nicht aktiviert** ist) die Interrogation zum aktuellen VDBNLR fortgesetzt.
Das VDBNLR prüft den Attach-Status des Teilnehmer (IMSI) und beantwortet die Interrogation mit einer temporären Rufnummer aus dem Bereich der TVSt (Mobil Station Roaming Number, MSRN) oder dem entsprechenden Cause *(absent subscriber*). Die MSRN wird vom HLR an das Gateway weitergegeben. Bei *absent subscriber* wird (sofern aktiviert) Call Forwarding Not Reachable im HLR angestoßen.
In dem Gateway wird die MSRN für den Rufaufbau zur aktuellen TVSt verwendet. Sobald der Call die aktuellen TVSt erreicht hat, erfolgt die Korrelation zum gerufenen Teilnehmers (IMSI) anhand der MSRN. In den VDBNLR-Daten ist der aktuelle physikalische Anschluß enthalten, via dem α-Interface wird eine dem GSM-Paging ähnliche Prozedur angestoßen und der Rufaufbau anschließend beendet. Das Endgerät wird mit der IMSI oder der TMSI vom Netz gerufen. Zur Authentisierung wird das im GSM-Standard verwendete Verfahren verwendet. Wenn im HLR ein IN-MTC-Trigger (optional) gesetzt ist, wird die Interrogation vorerst nicht zum VLR fortgesetzt, wie das in Figur 4 gezeigt ist. Statt dessen wird der IN-Trigger zum Gateway zurückgegeben und ein IN Dialog zu dem zuständigen Service Control Point (SCP) des INS initiiert. Die SCP-Addresse (E.164 Nummer) und der ServiceKey sind Bestandteil des In-Triggers. Nach Abschluß des IN Dialogs wird (sofern durch den IN Dialog keine andere Weiterführung für den Rufaufbau gefordert wird) eine erneute Interrogation zum HLR und weiter zum VLR initiiert.

### Steuerung von Supplemetary Services

ISDN und GSM Supplementary Services werden durch das funktionale Protokoll zwischen Endgrät und HLR gesteuert.
Die Steuerung zusätzlicher Dienste (nicht ISDNbzw. GSM Supplementary Services) im INS ist noch offen, kann aber beisielsweise über einem IN-IP oder via dem Internet erfolgen.

### SCF und HLF in einem Knoten, Variante INAP und MAP im Festnetz

Bei der in Figur 5 dargestellten Architektur besteht die Heimatdatenbank HDB aus einem Dienstedatenbank-Knoten SDP mit *Service Control Function* (SCF) und *Home Location Function* (HLF). Beide Funktionen greifen auf eine gemeinsame Datenbank zu. Die HLF ist zentraler Punkt für das Mobilitätsmanagement und verwaltet das Teilnehmerprofil für klassische ISDN/GSM-Dienste. Für spezielle Dienste ist Steuerung durch die SCF möglich. Die dafür notwendigen Triggerpunkte sind optionaler Bestandteil der Teilnehmerprofile.
Zur Umsetzung der Architektur ist eine MAP-Implementierung mit Interworking zum α-Interface in den TVStn notwendig. Darüber hinaus ist eine Neuentwicklung des HDB erforderlich. Die Anbindung der Vermittlungsstellen erfolgt auch hier über das MAP-Protokoll.

Das Objektmodell für das Teilnehmerprofil in der Database (SDP, Service Data Point) muß so designed werden, daß neben den GSM-Diensten auch alle ISDN-Dienste abbildbar sind. Nach Möglichkeit sollen vorhandene GSM-Objekte auch für ISDN-Dienste wiederverwendet werden. Sofern die GSM-Objekte zur Abbildung des ISDN-Dienstes nicht ausreichen, sollen die vorhandenen Objekte erweitert werden und als *private extention* im MAP übertragen werden. ISDN-Dienste die im GSM-Objektmodell nicht vorhanden sind, können als *network specific services* eingefügt und im MAP übertragen werden. Hierfür stehen jeweils 16 Dienste für die *Kategorien Supplementary Services, Teleservices und Bearer Services* zur Verfügung.

### Mobilitätsdaten

Dienste mit Mobilitätsangeboten benötigen neben den o.g. Subskriptionen für Zusatz-, Tele- und Bearerdienste auch eine Subskription für die Mobilität. Zur Gestaltung des PCS sind für den Festnetz- und Mobilfunkbereich folgende Optionen notwendig. Die Optionen der beiden Bereich sind beliebig kombinierbar.

### Festnetz:

1. Keine Einschränkungen, d.h. der Dienst steht dem Teilnehmer an allen Anschlüssen im T-Net, die für Mobilität aufgerüstet sind, zur Verfügung.
2. Begrenzt auf TVSt, d.h. der Dienst steht dem Teilnehmer an allen Anschlüssen im Bereich einer oder mehrerer TVSten, die für Mobilität aufgerüstet sind, zur Verfügung.
3. Begrenzt auf Anschluß, d.h. der Dienst steht dem Teilnehmer an einem oder mehreren Anschlüssen zur Verfügung.

### Mobilfunknetz:

1. Keine Einschränkungen, d.h. der Dienst steht dem Teilnehmer im gesamten Service Bereich der T-Mobil (D1-Netz und in den Netzen aller Roaming Partner) zur Verfügung.
2. Nur Heimnetz, d.h. der Dienst steht dem Teilnehmer nur im D1-Netz zur Verfügung.
3. Regional begrenzt, d.h. der Dienst steht dem Teilnehmer nur in explizit erlaubten Regionen im Service Bereich der T-Mobil (D1-Netz und in den Netzen der Roaming Partner) zur Verfügung.
Für den Mobilfunkbereich sind die Mobilitätsoptionen heute breites durch Funktionen im HLR und VLR realisiert. Für den Festnetzbereich sind grundsätzlich zwei Alternativen möglich, um die jeweiligen Optionen zu realisieren:
1. Im HLR sind keine Mobilitätsprofile für den Festnetzbereich abgelegt. Statt dessen wird in den TVSten pro Anschluß eine *Black- oder Whitelist* der nichtberechtigten bzw. berechtigen Teilnehmer verwaltet.
2. Im HLR wird die Berechtigung für einzelne Anschlüsse oder einzelne TVSten verwaltet *(Black- oder Whitelist)* und ggf. zum VDBNLR übermittelt. Eventuell kann die für den GSM-Standard definierte Regional Subscription Lösung für diese Anwendung verwendet oder erweitert werden.
Bevorzugt wird eine Lösung entsprechend Alternative 2, da dies den administrativen Aufwand in der TVSt minimiert und somit die Bereitstellung des Dienstes für den Teilnehmer beschleunigt.

### Heimatanschluß

Grundsätzlich sollen zwei Arten der Rufnummer dem PCS-Teilnehmer alternativ angeboten werden:
1. Servicerufnummer
2. Klassische Rufnummer aus dem Ortsnetz (Ortsnetzrufnummer)

Bei Verwendung der Servicerufnummer ist die Definition eines Heimanschlusses nicht notwendig. Im Gegensatz dazu muß jedoch bei Verwendung einer Ortsnetzrufnummer pro Teilnehmer ein Heimatanschluß eingerichtet werden. In der entsprechenden TVSt muß teilnehmerspezifisch zu der Ortsnetzrufnummer die jeweilige SCF-Addresse administriertwerden.

### IN-Trigger und IN-Teilnehmerdaten

Dienste, die über das Angebot der GSM- bzw. ISDN-Dienste hinausgehen können den Teilnehmer optional als teilnehmerspezifische IN-Dienste angeboten werden. Zur Ansteuerung dieser Dienste sind z.B. *Initial Detection Points, Service Key* und SCP-Addresse (IN-Trigger) notwendig. Zu unterscheiden sind Dienste die für ankommende Rufe (PTC, *PCS Terminating Call*) bzw. abgehende Rufe (POC, *PCS Originating Call*) relevant sind; bedingt durch die integrierte HDB Architektur sind jedoch nur explizite POC-IN-Trigger notwendig.
Die IN-Trigger für POC sind optionaler Bestandteil der Teilnehmerdaten im HDB und VDBNLR. Die Trigger werden im MAP übertragen.
Für PTC kann in der HDB festgestellt werden, ob ein IN-Behandlung gefordert ist und ggf. dort lokal ausgeführt werden.

Zusätzlich zu den o.g. IN-Triggern sind teilnehmerspezifischen IN-Daten in der Database notwendig. Auf diese wird jedoch hier nicht näher eingegangen.

### Prozeduren für die Mobilität

Im folgenden wird auf die Abläufe der wichtigsten Prozeduren für PCS eingegangen. Auf Prozeduren im mobilfunkbereich wird nicht eingegangen, da diese durch den GSM-Standard vorgegeben sind und wegen der notwendigen Kompatibilität zu anderen GSM-Netzen außerhalb der Standardisierung nicht veränderbar sind.

### Registrierung (Location Update)

Ziel der Registrierung ist es die benötigten Daten des Teilnehmerprofils von dem HDB in das VDB/VLR zu übertragen und im HDB den aktuellen Aufenthaltsinformation bereitzustellen. Die Registrierung ist grundsätzlich an jedem mit dem α-Interface ausgestattetem Anschluß möglich. Teilnehmerindividuelle Einschränkungen können durch das Teilnehmerprofil realisiert werden.
Die Registrierung wird durch das Endgerät angestoßen. Das Endgerät identifiziert sich in der Anforderung für die Registrierung gegenüber dem Netz mit der IMSI oder der TMSI. Zur Authentisierung wird das im GSM-Standard verwendete Verfahren verwendet. Es sind vier Arten der Registrierung zu unterscheiden:
1. Einbuchen eines Endgeräts an einem neuen Access im Bereich einer **neuen VDBIVLR:**
   Bei GSM Mobilstationen wird durch den Vergleich der auf der SIM gespeicherten *Location Area* mit der von dem *Broadcast Channel* ausgestrahlten *Location Area* die Notwendigkeit für ein Location Update erkannt. Eine vergleichbare Funktion muß für das α-Interface entwickelt werden.
   Da in diesem Fall der Teilnehmer nicht in dem VDB/VLR der TVSt registriert ist, verlängert das VDB/VLR die Anfrage zur HLF. Das zuständige HDB wird anhand der IMSI ermittelt (GTT nach ITU-T E.212). Je nach gewählter Alternative für die Mobilitätsoptionen im Festnetz, wird die Zulässigkeit der angeforderten Registrierung in der TVSt oder im HDB (für einzelne Anschlüsse nach Übertragung des Profils im VDB/VLR) überprüft. Dem HDB wird die E.1646nummer der TVSt als MSC- und VLR-Nummer übermittelt. Vor Abschluß der Registrierung wird das notwendige Teilnehmerprofil in das VDB/VLR übertragen. Das VDBNLR speichert den aktuellen Anschluß des Teilnehmers.
2. Einbuchen eines Endgeräts an einem neuen Access im Bereich des **alten VDBNLR**:
   Wie in Punkt 1.) erkennt das Endgerät die Notwendigkeit einer neuen Registrierung.
   Da in diesem Fall der Teilnehmer bereits in dem VDBNLR registriert ist, wird die Registrierung ohne Beteiligung des HDB ausgeführt. In dem VDBNLR wird je nach gewählter Alternative anhand der fest gespeicherten Daten oder der in dem dynamischen Profil enthaltenen Daten die Zulässigkeit der angeforderten Registrierung für diesen Anschluß überprüft. Das VDB/VLR speichert den aktuellen neuen Anschluß des Teilnehmers.
3. Anmelden des Endgeräts am **alten Access** nach ***IMSI-Detach:***
   Im VDBNLR wird das *ATT-Flag* auf *attached* gesetzt.
4. Nach Ablauf des *Periodic Location Update Timers* in dem Endgerät:
   In GSM-Endgeräten wird nach Ablauf eines *Periodic Location Update Timers* prophylaktisch eine periodische Registrierung initiiert. Der Startwert des Timers wird über den *Broadcast Channel* ausgestrahlten. Nach jeder Kommunikation zwischen Netz und Endgerät wird der Timer neu gestartet. Diese Prozedur ist wesentlicher Bestandteil der Implicit Detach Prozedur des VDBNLR (Teilnehmer wird automatisch *gedetached* wenn ein teilnehmerspezifischer Timer im VDBNLR abläuft, der Timer wird nach jeder Kommunikation zwischen Netz und Endgerät neu gestartet). Darüber hinaus wird die Prozedur zur Beseitigung von Inkonsistenten der Dateien verwendet. Eine vergleichbare Funktion muß deshalb auch für das α-Interface entwickelt werden.
   Je nach Datenstand des VDBNLR führt die periodische Registrierung zu den in Punkt 1.) bis 3.) genannten Aktionen.
Nach erfolgreicher Registrierung erfolgt eine temporäre Zuordnung des Teilnehmers, d.h. der IMSI zu dem physikalischen Anschluß. Grundsätzlich können mehrere Teilnehmer zeitgleich einem physikalischen Anschluß zugeordnet werden.

### PCS Originating Call (POC)

Ein PCS Originating Call (POC) wird vom Endgerät durch eine entsprechende Aufforderung (Setup) via dem α-Interface angestoßen. Das Endgerät identifiziert sich gegenüber dem Netz mit der IMSI oder der TMSI. Zur Authentisierung wird das im GSM-Standard verwendete Verfahren verwendet.
Im VDB/VLR wird die Zulässigkeit des angeforderten Calls (Subskription des Teleservices, ODB Sperren, Barring Einstellungen etc.) überprüft. Gegebenenfalls wird der Call mit dem entsprechenden Cause zurückgewiesen bzw. bei ODB zum Operator umgeleitet.
Nach erfolgreicher Überprüfung im VDB/VLR wird der angeforderte Call aufgebaut. Als CallingPartyNumber wird die im VDB/VLR gespeicherte Rufnummer (Basic MSISDN) des Anrufers (Ortsnetznummer oder Servicenummer) eingesetzt. Die LocationNumber wird anschlußabhängig aufgesetzt.
Wenn im VDB/VLR ein IN-MOC-Trigger (optional) gesetzt ist, wird ein IN Dialog zu dem zuständigen Service Control Point (SCP) initiiert. Die SCP-Addresse (E.164 Nummer) und der ServiceKey sind Bestandteil des In-Triggers.

### PCS Terminating Call (PTC)

Wie es in Figur 6 dargestellt ist, ist bei einem PCS Terminating Call (PTC) für den Rufaufbau eine INAP Abfrage zum SCF des HDB notwendig. Dieser INAP-Dialog ersetzt den bei GSM üblicherweise verwendeten MAP-Dialog am_C-Interface.
Die Abfrage (Interrogation) wird bei Teilnehmern mit einer Ortsnetzrufnummer von der TVSt mit dem Heimatanschluß (Gateway) gestartet. Anhand der zur Rufnummer gespeicherten SCF-Number (E.164 Nummer) wird das zutändige HDB abgefragt.
Bei Teilnehmern mit einer Servicenummer kann die Interrogation in beliegigen VSten oder MSCen erfolgen (Gateway). Anhand der Servicenummer (z.B. anhand der ersten vier Ziffern nach dem NDC) erfolgt eine eindeutige Zuordnung zu dem zuständigen HDB.
Mit der Interrogation zum HDB werden alle verfügbaren Dienstedaten übermittelt. Im HDB wird die Zulässigkeit des angeforderten Calls (Subskription des Teleservices, ODB Sperren, Barring Einstellungen etc.) überprüft. Gegebenenfalls wird der Call mit dem entsprechenden Cause zurückgewiesen.
Wenn in der Database ein IN-MTC-Trigger (optional) gesetzt ist, wird die Interrogation vorerst nicht zum VLR fortgesetzt. Statt dessen wird die IN-Behandlung im SCF gestartet. Nach Abschluß des IN Dialogs wird (sofern durch den In Dialog keine andere Weiterführung für den Rufaufbau gefordet wird) die Interrogation im HLF fortgeführt, d.h. die Interrogation zum aktuellen VDB/VLR fortgesetzt.
Das VDB/VLR prüft den Attach-Status des Teilnehmers (IMSI) und beantwortet die Interrogation mit einer temporären Rufnummer aus dem Bereich der TVSt (Mobil Station Roaming Number, MSRN) oder dem entsprechenden Cause (*absent subscriber*). Die MSRN wird vom HDB an das Gateway weitergegeben. Bei *absent subscriber wird* (sofern aktiviert) Call Forwarding Not Reachable im HDB angestoßen.
In dem Gateway wird die MSRN für den Rufaufbau zur aktuellen TVSt verwendet. Sobald der Call die aktuellen TVSt erreicht hat, erfolgt die Korrelation zum gerufenen Teilnehmer (IMSI) anhand der MSRN. In den VDB/VLR-Daten ist der aktuelle physikalische Anschluß enthalten, via dem α-Interface wird eine dem GSM-Paging ähnliche Prozedur angestoßen und der Rufaufbau anschließend beendet. Das Endgerät wird mit der IMSI oder der TMSI vom Netz gerufen. Zur Authentisierung wird das im GSM-Standard verwendete Verfahren verwendet.

### Steuerung von Supplemetary Services

ISDN und GSM Supplementary Services werden durch das funktionale Protokoll zwischen Endgrät und HDB gesteuert.
Die Steuerung zusätzlicher Dienste (nicht ISDN bzw. GSM Supplementary Services) im HDBist noch offen, kann aber beispielsweise über einem IN-IP oder via dem Internet erfolgen.

### Getrenntes Intelligent Network System mit Kopplung zum HLR

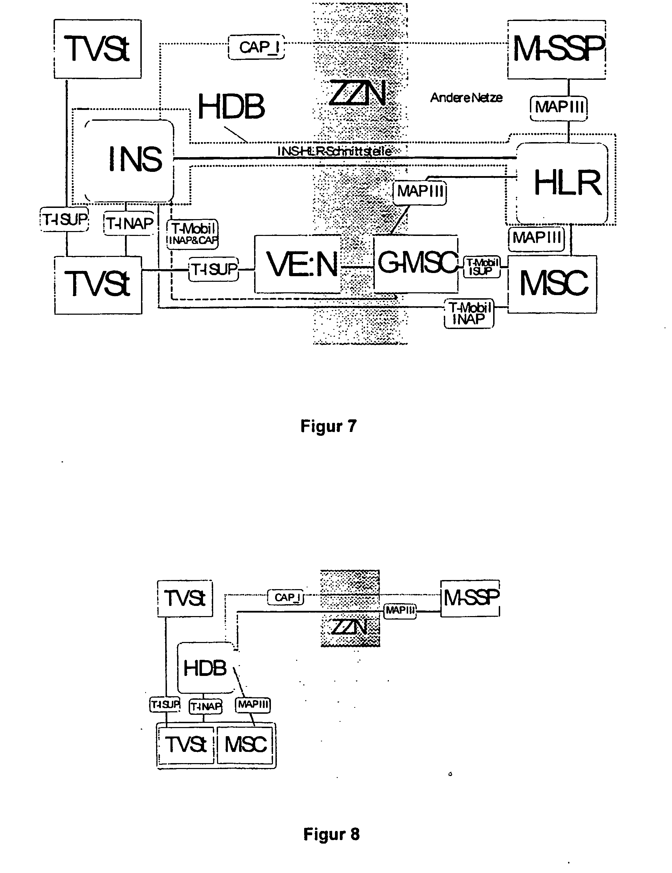

Gemäß Figur 7 besteht die Heimatdatenbank (HDB) bei dieser Konfiguration aus einem Intelligent Network System und einem GSM-HLR, die über eine zunächst proprietäre, offenen Schnittstelle verkoppelt sind. Dieser Ansatz wurde in dieser Form gewählt, um insbesondere zwei Aspekte zu berücksichtigen:
- Der hier beschriebene nächste Schritt zur Bereitstellung einer technischen Plattform für Verbunddienste sollte möglichst schon eine Entwicklung in die Richtung der Zielkonfiguration sein. Die Zielvorstellung beruht auf einem HDB/VDB-Konzept und basiert auf den Modellen der Intelligent Network Standards des Capability Set 2 und 3.
- Die Konvergenz der Dienstprofile und die Integration der Service Profile aus TVSt, HLR und SCP/SMP ist eines der wesentlichen Ziele der Produktentwicklung. Das hier beschriebene Modell erlaubt eine frühe und konsequente Umsetzung dieses Zieles.

Die hier vorgestellte Konfiguration sieht vor, daß das INS die gesamte Kommunikation zu den Vermittlungsstellen des Basisnetzes (zunächst nur TVSt, in einem Folgeschritt auch die MSC-Funktionen des eigenen Netzes) übernimmt und als zentraler Punkt des Dienstemanagements und Mobilitätsmanagement agiert. Das HLR übernimmt die Anpassung an die GSM-Schnittstellen (MAP). Veränderungen an den Daten des Diensteprofils eines Teilnehmers werden über das HLR dem INS weitergegeben und von dort quittiert. Die GSM Daten sind im INS abgebildet.

Das INS ist aus Konfigurationsgründen im Festnetz angesiedelt, das HLR aus Gründen der einfacheren Konfiguration zunächst im Mobilfunknetz. Der INAP wird über die Netzgrenze geführt, die SCP-Funktion ist im Festnetz angesiedelt. Die Konfiguration kann in einem Folgeschritt durch Integration von INS und HLR bzw. TVSt und MSC mit kleineren Veränderungen der Netzkonfiguration zu einem konvergenten Festnetz weiterentwickelt werden. Diese Grundstruktur ist in Figur 8 dargestellt.

Für spezielle Dienste ist zunächst die Steuerung durch ein INS auf der Mobilfunkseite möglich, die PCS-Tln-Daten sind jedoch auf der HDB-Struktur komplett abgebildet. Die Triggerpunkte für das Anstoßen der INS von der Mobilfunkseite aus sind optionaler Bestandteil des GSM-Teilnehmerprofils, die Triggerpunkte im T-Net sind in den TVSt armiert. (Einer E.164 Nummer ist jeweils eine "Heim-TVSt" zugeordnet, die die relevanten Triggerpunkte enthält.) Zur Umsetzung der Architektur ist eine Erweiterung des INAP um bestimmte MAP-Funktionen notwendig. (MAP-Funktionen zum Location Update und ankommenden Verbindungsaufbau.)
Ein Interworking zwischen INAP und dem a-Interface ist für den Zugang für Teilnehmer mit Mobilitätsfunktionen vom T-Net Access aus vorgesehen.

### Subskription und teilnehmerspezifische Daten

### Allgemeine Dienstedaten

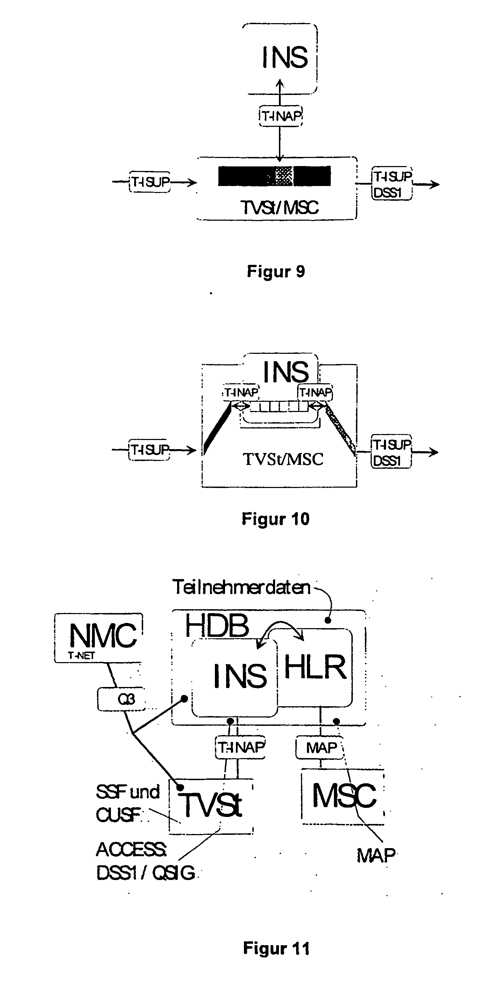

Eines der wesentlichen Ziele bei der Weiterentwicklung der PCS-Angebote ist die Konvergenz der Dienstprofile. Dies bedeutet vor allen Dingen, daß das Service Profile eines Teilnehmers nicht, wie heute in bis zu drei nicht miteinander korrelierten Datenbanken (TVSt, SCP/SDP und HLR) sondern an einer Stelle zusammengefaßt wird. Dies betrifft einerseits die Eingabe und Veränderung von Daten des Diensteprofils (z.B. Ziele der Anrufweiterschaltung, gesperrte Ziele usw.), andererseits die konkrete Bearbeitung eines Dienstmerkmales. Der zuerst genannte Aspekt, die Haltung und Veränderung der Teilnehmerdaten, sollte umfassend im INS möglich sein.
Für die konkrete Ausführung von Diensten, Dienstmerkmalen und IN-Funktionen muß festgelegt werden, wo sie stattfindet. Dabei sind zwei Extreme denkbar:
- Auf der Basis sehr umfangreicher Daten, die in die VDB-Funktion geladen werden, ist die Behandlung der Verbindung - zumindest zu einem großen Teil - in der TVst/MSC möglich, ohne für den konkreten Fall eine IN-Abfrage zu starten. Vom IN her werden nur noch einzelne Informationen beigesteuert, die in die Nachrichten und Parameter für die weitere Anrufbehandlung eigebaut werden. Das INS spielt in diesem Falle - wie vom "klassischen" IN her bekannt - die Rolle einer "Zusatzsteuerung, die eigentliche Call Control Funktion liegt in der TVSt/MSC. Diese Situation gibt Figur 9 wieder. Dabei werden die in der TVSt/MSC empfangenen Daten dort gespeichert, behandelt und weitergeschickt. Das INS nimmt Einfluß durch die Veränderung einzelner Informationen.
- Im zweiten Fall, welcher in Figur 10 dargestellt ist, ist das INS in die Behandlung der Verbindng sehr viel enger einbezogen als im ersten Fall. Alle Nachrichteninhalte werden durch das INS aufgesetzt, nur die vom INS erzeugten, veränderten oder unveränderten Nachrichten werden weitergeschickt.

Der zweite hier beschriebene Fall ist derjenige, der mit den Zielvorstellungen besser harmoniert, da die Behandlung der Dienste, Dienstmerkmale und IN-Funktionen im HDB vereint sind.

Dadurch wird es zum einen möglich, die Interaktion von Diensten und Dienstmerkmalen mit überschaubarem Aufwand zu behandeln, zum anderen wird ein für den Teilnehmer nachvollziebarer Status seiner Dienstmerkmale erreicht. (Beispiel: Die Eingabe von Forwarding Zielen überschreibt jeweils die vorher eingegebenen Ziele, unabhängig davon, von welchem Access aus die Steuerung des Dienstmerkmals geschieht. Dadurch wird dem Teilnehmer nicht mehr zugemutet, daß er verstehen muß, daß Forwarding-Ziele auf verschiedenen Plattformen unabhängig voneinander existieren können.)
Da das Ziel ein einheitliches Service Profile für einen Teilnehmer ist, muß das Teilnehmerprofil im INS es erlauben, sowohl alle vorhandenen (und künftigen) ISDN- als auch GSM-Dienste abzubilden.

Im Sinne des Zieles von netzübergreifender Mobilität wird es notwendig, das Service Profile eines Teilnehmers ebenfalls mobil zu machen. Dies ist schematisch in Figur 11 dargestellt.Das Dienstprofil eines mobilen Teilnehmers muß in beliebigen TVSt immer dann zur Verfügung stehen, wenn der Teilnehmer sich im Bereich einer TVSt aufhält.
Die Objektmodelle für die Einrichtung und Veränderung der Teilnehmerdaten in den Netzknoten (im Sinne von TMN) werden soweit wie möglich aus vorhandenen Implementationen (Q3-Schnittstellen an TVSt und MSC) übernommen, das Diensteprofil befindet sich zunächst im INS. Beim Einbuchen des Teilnehmers in einer bestimmten TVSt wird das Profil dorthin geladen. (Visitor Data Base, VDB-Funktion in der TVSt.) Die dazu norwendigen Datenstrukturen sollen soweit wie möglich an den für die Q3-Schnittstelle festgelegten Objektmodellen angelehnt sein, als Transportmechanismus soll der nun als SPS1-Standard verfügbare "Application Transport Mechanism (APM)" auf dem TCAP verwendet werden. Dieser Mechanismus ist auch die Grundlage für den Transport der Informationen zwischen CUSF (Call unrelated Service Function) und SCF. Die CUSF (IN, CS2) wird zusätzlich zur SSF in den TVSt u.a. dazu benutzt, die Anschlußleitungs-Protokolle zur Steuerung der Dienstmerkmale (funktional, key pad, analog) von der TVSt zum SCF zu "verlängern".

Dabei müssen - im Sinne eines einheitlichen Diensteprofils - die ISDN- oder GSM-Diensteprofile ggf. einander angepaßt werden. Die zur Steuerung der Dienste und zur Veränderung der Teilnehmerdaten vom Access her notwendigen Protokolle und Datenstrukturen können dabei in weiten Teilen aus dem ISDN D-Kanal und dem GSM MAP übernommen werden. Ziel ist eine offene Protokollstruktur entsprechend dem zukünftigen DSS1+ Standard, da nur so der konvergierenden Entwicklung von privaten und öffentlichen Netzen Rechnung getragen werden kann.
Protokolle auf der Basis des Generic Functional Protocol sind auf den TCAP portierbar. Ein erstes Beispiel ist der in SPS5 entstandene VPN-Standard.
Das Objektmodell für das Teilnehmerprofil im HDB muß in Richtung der GSM-Netzkomponenten so angepasst werden, daß alle vorhandenen GSM-Objekte weiterverwendet werden können. Insbesondere die Daten, die in das GSM-VLR über den MAP geladen werden, sollten unverändert bleiben.

### Mobilitätsdaten

Dienste mit Mobilitätsangeboten benötigen neben den o.g. Subskriptionen für Supplementary-, Bearer- und Teleservices auch eine Subskription für das Merkmal Mobilität. Um das PCS-Angebot skalierbar zu machen, sind sowohl für das T-Net und das T Mobil-Net die im Folgenden beschriebenen Optionen notwendig, die beliebig miteinander kombinierbar sein sollen:

### T-Net

- Keine Einschränkungen, d.h. das Merkmal Mobilität steht dem Teilnehmer an allen Anschlüssen im T-Net zur Verfügung, an denen die Mobilitätsfunktionen aktiviert sind.
- Begrenzt auf den Bereich einer TVSt, d.h. das Merkmal Mobilität steht dem Teilnehmer an allen Anschlüssen einer oder mehrerer TVSt im T-Net zur Verfügung, an denen die Mobilitätsfunktionen aktiviert sind.
- Begrenzt auf einen Anschluß (Anschluß im Sinne von Basisanschluß, PMX-Anschluß), d.h. das Merkmal Mobilität steht dem Teilnehmer an einem oder mehreren vorher bestimmten Anschlüssen im T-Net zur Verfügung, an denen die Mobilitätsfunktionen aktiviert sind.
- Andere Profile sind wegen der in diesem Konzept verwendeten IN-Basis mit gerimgem Aufwand darstellbar..

### T-MobilNet

- Keine Einschränkungen, d.h. das Merkmal Mobilität steht dem Teilnehmer im gesamten Service Bereich der T-Mobil zur Verfügung.
- Begrenzt auf den Bereich des Heimatnetzes, d.h. das Merkmal Mobilität steht dem Teilnehmer nur im D1-Netz zur Verfügung.
- Regional begrenzt, d.h. das Merkmal Mobilität steht dem Teilnehmer nur in explizit erlaubten Regionen im Service-Bereich der T-Mobil zur Verfügung.
Sobald die Möglichkeit der Nutzung von Mobilitätsfunktionen von jedem T-Net-Anschluß aus gegeben ist, lassen sich mit den Mitteln des IN die oben genannten (und ggf. andere) Mobilitätsoptionen im T-Net-HDB sehr einfach realisieren. Für den Mobilfunkbereich sind die genannten Mobilitätsoptionen bereits durch Funktionen im HLR und VLR realisiert, eine Umstellung auf die Nutzung der Möglichkeiten des IN wäre hier (im Sinne eines einheitlichen Diensteprofils) anzustreben.

### Heimatanschluß

Grundsätzlich sollen zwei Arten von Rufnummern dem PCS-Teilnehmer alternativ angeboten werden können:
- Rufnummer aus dem Bereich der Servicerufnummern (ohne 0171) oder
- Rufnummer aus dem Bereich der Ortsnetzkennzahlen.

Bei der Verwendung einer Servicerufnummer muß die Zuordnung aller Teilnehmer zu ihren jeweiligen IN SCP-Funktionen in jedem Netzknoten (oder in einer definierten Untermenge davon) bekannt und aktuell verfügbar sein. Die Leitweglenkung für Servicerufnummern ist, unabhängig von PCS, in allen VSt realisiert. Bei der Verwendung von ONKZ kann die Einrichtung der Trigger- und SCP-Zuordnungsdaten auf eine definierte TVSt (Heimat TVSt) begrentzt werden.

### IN-Trigger und IN-Teilnehmerdaten

Die im IN abgebildeten, bereits vorhandenen Dienste aus den Bereichen GSM und ISDN können um zusätzliche Dienste entsprechend den Möglichkeiten des IN erweitert werden. Dabei können die in den IN-Implementationen vorgesehenen (originating/terminating) Detection Points eingesetzt werden. Zu unterscheiden sind Szenarien für ankommende Rufe (PTC, *PCS Terminating Call*) von denen für abgehende Rufe (POC, *PCS Originating Call*), es sind jeweils unterschiedliche IN-Trigger notwendig.

Die IN-Trigger Detection Points für PCS-Teilnehmer sind im GSM-Fall als Bestandteil der Teilnehmerdaten im HDB zu führen und über die HLR-Funktion über den MAP *(Service Key*) zur jeweiligen MSC zu übertragen. Im Falle der Behandlung von Verbindungen in der ISDN T-Net Struktur sind grundsätzlich zwei Lösungen denkbar:
- Die Detection Points als Daten im HDB gehalten und beim Aufbau einer ankommenden Verbindung der TVSt übergeben. Dies setzt voraus, daß für jede Verbindung (auch für nicht-PCS-Verbindungen) eine IN Abfrage stattfindet. Für den abgehenden Verbindungsaufbau müssen die Trigger-Tabellen in die VDB geladen werden.
- Darum erscheint das Konzept einer "Heimat"-TVSt, in der die entsprechenden Trigger für ankommende Verbindungen armiert sind, der weniger aufwendige Weg zu sein. Die Armierung von Triggerpunkten für abgehende Verbindungen muß, wie im ersten Fall, in der jeweils aktuellen (Visited-)TVst mit dem Laden des Teilnehmerprofils geschehen (s.o.).

### Prozeduren für die Mobilität

Im folgenden wird auf die Abläufe der wichtigsten Prozeduren für PCS eingegangen. Auf Prozeduren im Mobilfunkbereich wird nicht eingegangen, da diese durch den GSM-Standard vorgegeben sind und wegen der notwendigen Kompatibilität zu anderen GSM-Netzen außerhalb der Standardisierung nicht veränderbar sind.

### Registrierung (Location Update)

Ziel der Registrierung ist es, die benötigten Daten des Teilnehmerprofils von dem HDB in das VDB/VLR zu übertragen und im HDB die aktuellen Aufenthaltsinformationenbereitzustellen. Die Registrierung ist grundsätzlich an jedem mit dem α-Interface ausgestattetem Anschluß möglich. Teilnehmerindividuelle Einschränkungen werden durch das Teilnehmerprofil realisiert.
Die Registrierung wird durch das Endgerät angestoßen. Das Endgerät identifiziert sich in der Anforderung für die Registrierung gegenüber dem Netz mit der IMSI oder der TMSI. Zur Authentisierung wird das im GSM-Standard verwendete Verfahren verwendet.
Nach erfolgreicher Registrierung erfolgt eine temporäre Zuordnung des Teilnehmers, d.h. der IMSI zu dem physikalischen Anschluß. Grundsätzlich können mehrere Teilnehmer zeitgleich einem physikalischen Anschluß zugeordnet werden.

Es sind vier Arten der Registrierung zu unterscheiden:

### Einbuchen eines Endgeräts an einem neuen Access im Bereich einer neuen VDB/VLR

Bei GSM Mobilstationen wird durch den Vergleich der auf der SIM gespeicherten Location Area mit der von dem *Broadcast Channel* ausgestrahlten *Location Area* die Notwendigkeit für ein Location Update erkannt. Da die SIM auch innerhalb des Festnetzes verwendet werden soll, muß das Konzept der Location Area für die T-Net-Anwendung weiterentwickelt werden. Dabei ist die Kompatibilität mit den GSM-Prozeduren sicherzustellen, da beide Prozeduren nicht paralell zueinander sondern miteinader zum Einsatz kommen. Daher müssen auf der SIM gespeicherte GSM-Location Areas verstanden werden und vom Festnetz Location Areas auf die SIM gespeichert werden, die in den GSM-Komponenten zu keinen Inkompatibilitäten führen. Das α-Interface muß eine entsprechende Funktion unterstützen.
Das Location Update wird vom VDBNLR der TVSt zum INS/HLR hin verlängert. Das richtige INS wird anhand der IMSI ermittelt. Die Zulässigkeit der angeforderten Registrierung wird im INS/HLR überprüft. Dem INS wird eine TVSt/VDB-Kennung im Format einer E.164-Nummer oder eine MSC- und VLR-Nummer im E.164-Format übermittelt. Vor Abschluß der Registrierung wird das notwendige Teilnehmerprofil in das VDBNLR übertragen (s.o.). Das VDBNLR speichert den aktuellen Anschluß des Teilnehmers.

### Einbuchen eines Endgeräts an einem neuen Access im Bereich des alten VDB/VLR

Wie weiter oben beschrieben, erkennt das Endgerät die Notwendigkeit einer neuen Registrierung. Das Location Update wird nun wie oben beschrieben vom VDBNLR der TVSt zum INS/HLR hin verlängert. Im INS/HLR wird je nach gewählter Alternative anhand der dort gespeicherten Daten die Zulässigkeit der angeforderten Registrierung für diesen Anschluß überprüft. Das INS speichert den aktuellen neuen Anschluß des Teilnehmers.

### Anmelden des Endgeräts am alten Access nach IMSI-Detach:

Im VDB/VLR wird das ATT-Flag auf attached gesetzt.

### Nach Ablauf des Periodic Location Update Timers in dem Endgerät

In PCS-Endgeräten wird nach Ablauf eines Periodic Location Update Timers prophylaktisch eine periodische Registrierung initiiert. Der Teilnehmer wird automatisch an diesem Standort abgemeldet *(detach),* wenn ein teilnehmerspezifischer Timer im VDBNLR abläuft. Der Startwert des Timers wird im Rahmen der Kommunikation zwischen Endeinrichtung und VDB über das α-Interface festgelegt. Der Timer wird nach jeder Kommunikation zwischen Netz und Endgerät neu gestartet. Die Periodic Location Update Prozedur läuft entsprechend der oben beschriebenen Prozedur ab.
Diese Prozedur ist wesentlicher Bestandteil der Implicit Detach Prozedur des VDBNLR. Darüber hinaus wird die Prozedur zur Beseitigung von Inkonsistenzen der Dateien verwendet. Die Periodic Location Update Prozedur muß darum auch auf Basis des α-Interfaces entwickelt werden.

### PCS Originating Call (POC)

Ein PCS Originating Call (POC) wird vom Endgerät durch Aussenden einer Setup-Nachricht im D-Kanal angestoßen. Das Endgerät identifiziert sich gegenüber dem Netz mit der IMSI oder der TMSI. Zur Authentisierung wird das im GSM-Standard verwendete Verfahren verwendet.
Im VDBNLR wird die Zulässigkeit der gewünschten Verbindung überprüft. (Berechtigungen für Dienste, Dienstmerkmale, Sperren, Barring Einstellungen etc.) Gegebenenfalls wird der Verbindungswunsch mit dem entsprechenden Cause zurückgewiesen oder zum Operator umgeleitet. Nach erfolgreicher Überprüfung im VDB/VLR wird die Verbindung aufgebaut , ggf. werden zuvor armierte TDP abgearbeitet. Als CallingPartyNumber wird die im VDBNLR gespeicherte Rufnummer (Basic MSISDN) des Anrufers (Ortsnetznummer oder Servicenummer) eingesetzt, sofern keine andere CallingPartyNumber vom SCP gesetzt wird. Die LocationNumber wird anschlußabhängig aufgesetzt. Die SCP-Addresse und der ServiceKey sind Bestandteil der IN-Trigger Tabelle.

### PCS Terminating Call (PTC)

Bei einem PCS Terminating Call (PTC) zu einer Rufnummer im Format einer Ortsnetzkennzahl ist in der HeimatTVSt des PCS Teilnehmers grundsätzlich ein TDP armiert, der zu einer Abfrage beim HDB führt. Bei ankommenden Verbindungen zu einer Diensterufnummer wird ebenfalls eine INS-Abfrage initiiert. Anhand der in der Triggertabelle gespeicherten INS-Adresse (E.164 Nummernformat) wird das zutändige INS abgefragt.
Bei Teilnehmern mit einer Servicenummer kann eine IN-Abfrage in beliegigen Netzknoten (zunächst nur) des eigenen Netzes erfolgen. Anhand der Servicenummer muß eine eindeutige Zuordnung zu dem zuständigen INS möglich sein.
Mit der IN-Abfrage werden alle verfügbaren Dienstedaten von der TVSt zum INS übermittelt. Im Falle einer Rufnummer im Format einer Ortsnetzkennzahl wird der Attach-Status des Teilnehmers (IMSI) in der IDP dem SCP mitgeteilt. Im SCP wird die Zulässigkeit der angeforderten Verbindung überprüft. Gegebenenfalls wird die Verbindung mit dem entsprechenden Cause zurückgewiesen.
Nach erfolgreicher Überprüfung im SCP wird entsprechend der verwendeten Rufnummernstruktur
- mit der vom SCP empfangenen Steuerinformation die Verbindung weiterbehandelt (Rufnummer im Format einer Ortsnetzkennzahl) oder
- im Falle einer Servicerufnummer (Abfrage von einem beliebigen Knoten im Netz) zunächst der Attach-Status des Teilnehmers (IMSI) vom SCP in der VDB/VLR überprüft. Die VDB/VLR beantwortet die SCP-Abfrage mit einer temporären Rufnummer aus dem Bereich der TVSt (Mobil Station Roaming Number, MSRN) oder dem entsprechenden Cause (absent subscriber). Die MSRN wird an den abfragenden Netzknoten weitergegeben. In dem Netzknoten wird die MSRN für den Rufaufbau zur aktuellen TVSt verwendet (oder mit der vom SCP empfangenen Steuerinformationen die Verbindung weiterbehandelt). Sobald die Verbindung die aktuelle TVSt erreicht hat, erfolgt die Korrelation zum gerufenen Teilnehmer (IMSI) anhand der MSRN. In den VDB/VLR-Daten ist der aktuelle physikalische Anschluß enthalten, zu dem die Verbindung aufgebaut werden soll. Das Endgerät wird mit der entsprechenden IMSI oder der TMSI vom Netz gerufen. Das Pagen des Endgerätes wird direkt vom T-Net gesteuert. Zur Authentisierung wird das im GSM-Standard verwendete Verfahren verwendet.

### Steuerung von Dienstmerkmalen

Zur Steuerung von ISDN- und GSM-Supplementary Services siehe erste Ausführungsform unter Allgemeine Dienstedaten.

### Zugang zur PCS-Box

### Ablegen von neuen Nachrichten

Die Nachrichten werden durch den SCP gesteuert, zur PCS-Box geleitet.

### Benachrichtigung durch PCS-Box

Die Benachrichtigung geschieht über SMS zu GSM Endgeräten und Message Waiting Indication entsprechend des ETSI Standards zu ISDN EG.

### Abfrage der PCS-Box

Die Abfrage der PCS Box geschieht vom T-Net und vom Mobilnetz aus unter Verwendung der Möglichkeiten, die die Authentifikation über SIM bietet, eine PIN wird nicht mehr verwendet.

### Numbering & Routing

Die Nummernparameter des GSM werden im T-Net ebenfalls benutzt. Bei den verwendeten Nummern sind die teilnehmerbezogenen (IMSI, MSISDN, MSRN, Access-ID, MSN) und die Netzknoten-bezogenen Parameter zu unterscheiden.(HDB (SCP/HLR)-Adressen im E.164 Format, VDB Adresse im E.164 Format, TVSt Adresse im E.164 Format.)

### Interworking zwischen Anschluß- und Netzprotokollen

wurde bereits weiter oben behandelt

### Bereitstellung von Abrechnungsdaten

Die Zuordnung von Abrechnungsdaten muß zu lDs, nicht zu Netzadressen erfolgen.

### SCF und HLF in einem Knoten, Variante INAP im Festnetz

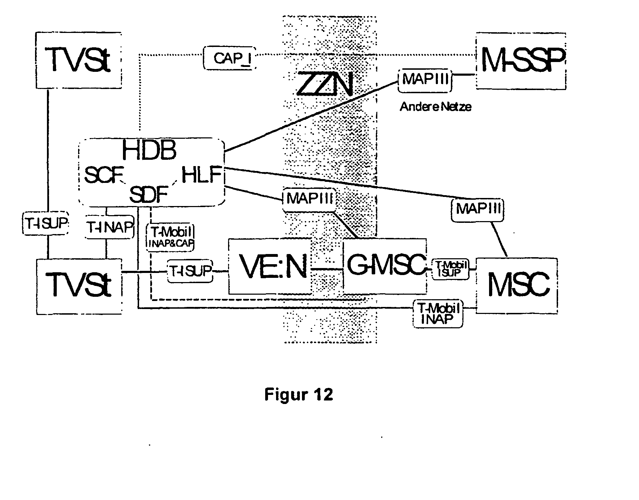

In einer vierten Ausführungsform der Erfindung besteht die HDB aus einem Knoten mit *Service Control Function* (SCF) und *Home Location Function* (HLF). Dies ist in Figur 12 dargestellt. Die SCF übernimmt die gesamte Kommunikation zu den Vermittlungsstellen des Basisnetzes (zunächst nur TVSt, in einem Folgeschritt auch die MSC-Funktionen des eigenen Netzes) und agiert als zentraler Punkt des Mobilitätsmanagement. Die HLF übernimmt die Anpassung an die GSM-Schnittstellen (MAP). Beide Funktionen greifen auf eine gemeinsame Datenbank zu. Die Konfiguration macht eine Neuentwicklung des HDB erforderlich.

Der wesentliche Unterschied zu dem Konzept gemäß Figur 7 liegt darin, daß die HDB nun in einem Netzknoten zusammengefaßt ist. Damit fällt die Kommunikation zwischen INS und HLR über eine proprietäre Schnittstelle weg. Dies ist insbesondere von Bedeutung bei zeitkritischen Vorgängen, die innerhalb festgelegter Quittungszeiten abgeschlossen sein müssen. Diese Fälle treten insbesondere bei der Quittierung von Prozeduren des HLR gegenüber dem GSM-Netz auf. Da das INS immer die aktuellen Daten des Teilnehmers halten soll, kann die Quittierung nur von dort (über das HLR) in das GSM-Netz erfolgen. Wegen dieser Vereinfachungen ist die hier beschriebene Lösung baldsmöglichst anzustreben.
Da die Abläufe und Randbedingungen im Wesentlichen den bereits beschriebenen Funktionen entsprechen, wird hier auf eine wiederholte Darstellung verzichtet. Das INS/HLR ist jeweils durch das HDB zu ersetzen.

### Realisierungsalternativen im Überblick

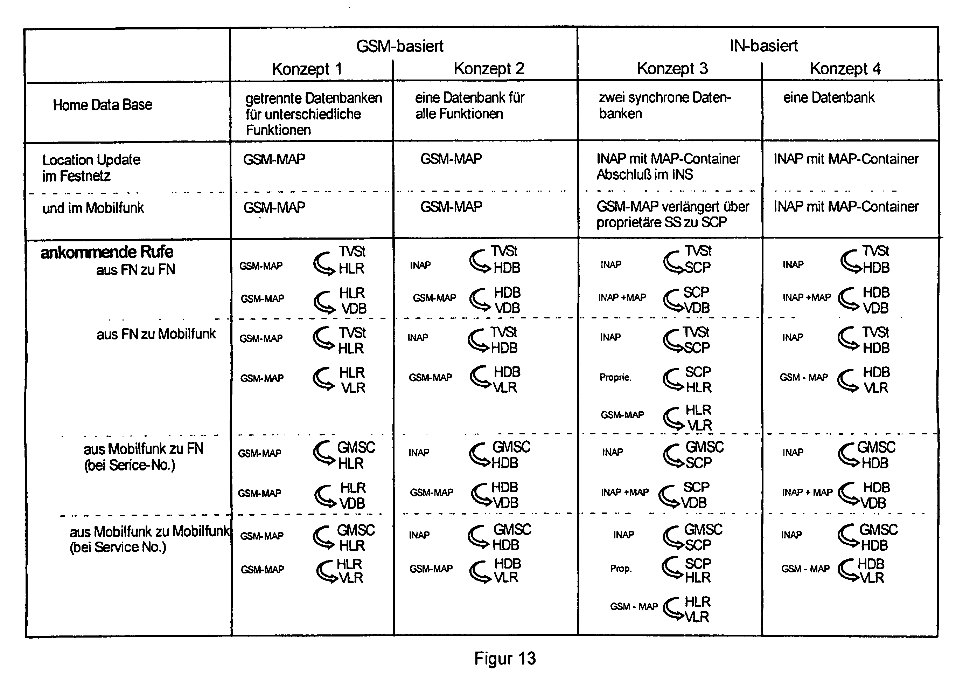

Figur 13 gibt einen Überblick über alle beschriebenen Realisierungsalternativen.

### Verzeichnis der verwendeten Abkürzungen und Begriffe

| **Abkürzung** | **Englisch** | **Deutsch** |
|---|---|---|
| APM | Application Transport Mechanism | (Kein eingeführter Begriff) |
| ATT | Attatched | "aktiv" (Flag-Status) |
| CUSF | Call Unrelated Service Function | Gesprächsunabhängige Dienstefunktion |
| D1 | D1-Net | D1 -Netz |
| DECT | Digital Enhanced (European) Cordless Telecammunication | Digitaler Standard für schnurlose Telefone in Europa |
| D-Kanal | | Digitalsignalkanal (ISDN) |
| DSS | Digital Subscriber Signalling | Teilnehmer-Signalisierungsprotokoll (ISDN) |
| EG | | Endgerät |
| FN | | Festnetz |
| FPLMN | Future Public Land Mobile | Zukünftiges öffentliches Mobilfunknetz |
| | Telecommunications Network | |
| G- | Gateway | Netzübergangs- |
| | Gateway Mobile Services Switching | Netzübergangs-Mobilvermittlungseinrich- |
| GMSC | Centre | tung |
| HBS | Home Base Station | Heimat-Feststation |
| HDB | Home Data Base | Heimat-Datenverwaltung |
| HLF | Home Location Function | (Kein eingeführter Begriff) |
| HLR | Home Location Register | Heimatregister |
| IAM | Initial Address Message | Zieladresse |
| ID | Identification | Identifikation |
| IDP | Initial Detection Point | (Triggerpunkt) |
| IMSI | International Mobile Subscriber Identity | Internationale Teilnehmerkennung |
| IN | Intelligent Network | Intelligentes Netz |
| INAP | IN Application Protocol | Intelligentes Änwendungsprotokoll |
| INS | Intelligent Network System | Intelligentes Netzsystem |
| IP | Internet Protocol | Internet-Protokoll |
| | Intelligent Peripheral | Ansage-/Eingabeeinrichtung |
| ISDN | Integrated Services Digital Network | Diensteintegrierendes digitales |
| | | Fernmeldenetz |
| ISUP | ISDN User Part | ISDN-Teilnehmerseite |
| M- | Mobile | Mobil- |
| MAP | Mobile Application Part | Mobiles Anwenderteil |
| MOC | Mobile Originated Call | Vom Mobilgerät abgehender Anruf |
| MSC | Mobile Services Switching Centre | Mobilvermittlungszentrale |
| MSISDN | Mobile Station ISDN Number | ISDN-Mobilfunk-Rufnummer |
| MSN | Multiple Subscriber Number | Mehrfachrufnummer |
| MSRN | Mobile Station Roaming Number | Kennung für Mobiltelefonteilnehmer bei Verbindung über fremde Netze |
| MTC | Mobile Terminated Call | Am Mobilgerät ankommender Anruf |
| NDC | National Destination Code | Zugangskennzahl |
| NMC | Network Management Centre | Netzmanagement-Zentralstation |
| ODB | Operator Determining Barring | Operatorveranlaßte Sperre |
| ONKZ | National Destination Number | Ortsnetzkennzahl |
| PABX | Private Automatic Branche Exchange | Private Nebenstellenanlage |
| PCS | Personal Communication Service | Individueller Kommunikationsdienst |
| PLMN | Public Land Mobile Network | Öffentliches Mobilfunknetz |
| POC | PCS Originating Call | PCS-abgehender Änruf |
| PTC | PCS Terminating Call | PCS-ankommender Anruf |
| SCF | Service Control Function | Dienstesteuerungsfunktion |
| SCP | Service Control Point | Dienstesteuerungsknoten |
| SDF | Service Data Function | Dienstedatenbank |
| SDP | Service Data Point | Dienstedatenbank-Knoten |
| SIM | Subscriber Identity Module | Benutzer-Identifikationsmodul |
| SMP | Service Mana ement Point | Dienste-Administrationsrechnerknoten |
| SMS | Short Message Service | Kurznachrichtendienst |
| SRI | Send Routing Info | Wegeleitinformations-Befehl |
| SS | Interface | Schnittstelle |
| SSF | Service Switching Function | Verbindungsvermittlungsfunktion |
| SSP | Service Switching Point | Verbindungsvermittlungsknoten |
| T- | Temporary | Temporär- |
| | Subscriber | Teilnehmer |
| TCAP | Transaction Capability Application Part | Transaktions-Anwenderteil |
| TMSI | Temporary Mobile Subscriber Identity | Temporäre Identität des Mobilteilnehmers |
| TVSt | Local Exchange | Teilnehmer-Vermittlungsstelle |
| V- | Visitor | Besucher- |
| VDB | Visitor Data Base | Besucher-Datenbank |
| VE: N | Gateway | Netzübergangs-Vermittlungseinrichtung |
| VLR | Visitor Location Register | Aufenthaltsregister/-datenbank; |
| | | Besucherregister/-datenbank |
| VMSC | Visited MSC | Besuchte MSC |
| Vst | Switch | Vermittlungsstelle |
| ZZN | Signalling Interconnection Network | Zeichengabe-Zwischennetz |

## Patentansprüche

1. Verfahren zum Anschluß von Teilnehmern in mehreren Telekommunikationsnetzen unter einer Rufnummer, wobei mindestens eines der Telekommunikationsnetze ein Mobilfunknetz mit Mobilitätsmanagementfunktion, z.B. ein GSM-Mobilfunknetz, und mindestens ein weiteres Telekommunikationsnetz ein digitales, Intelligentes Festnetz ist,
**dadurch gekennzeichnet,**
**daß** die Teilnehmerdaten in einer gemeinsamen Heimatdatenbank (HDB) in mindestens einem der Telekommunikationsnetze abgespeichert und verwaltet und auf Anfrage den anderen Telekommunikationsnetzen zur Verfügung gestellt werden, wobei die Heimatdatenbank (HDB) die Aufgaben eines Heimatregisters (HLR) und eines Intelligenten Netzwerksystems (INS) übernimmt.

2. Verfahren nach Anspruch 1, **dadurch gekennzeichnet, daß** das Heimatregister (HLR) und das Intelligente Netzwerksystem (INS) nicht miteinander gekoppelt sind und getrennte Funktionen übernehmen und beide sowohl mit den Vermittlungsstellen (M-SSP) des Mobilfunknetzes als auch mit den Vermittlungsstellen (M-TVSt) des Festnetzes über eine MAP-Schnittstelle kommunizieren.

3. Verfahren nach Anspruch 1 oder 2, **dadurch gekennzeichnet, daß** das Teilnehmerprofil des Heimatregister (HLR) und der Besucherregister (VLR) des Mobilfunknetzes derart erweitert wird, daß die vorhandenen Dienste des Festnetzes abbildbar sind.

4. Verfahren nach einem der Ansprüche 1 bis 3, **dadurch gekennzeichnet, daß** die Signalisierung zwischen den Endgeräten und den Vermittlungsstellen (M-TVSt) des Festnetzes über einen um Mobilitätsfunktionen erweiterten Steuerkanal (D-Kanal) erfolgt (α-Interface).

5. Verfahren nach einem der Ansprüche 1 bis 4, **dadurch gekennzeichnet, daß** die Funktionen des Mobilitätsmanagement des Mobilfunknetzes auf das Festnetz ausgeweitet werden.

6. Verfahren nach einem der Ansprüche 1 bis 5, **dadurch gekennzeichnet, daß** eine MAP-Implementierung mit Interworking zum α-Interface in den Vermittlungsstellen (M-TVSt) des Festnetzes erfolgt.

7. Verfahren nach einem der Ansprüche 1 bis 6, **dadurch gekennzeichnet, daß** der Anschluß des Endgerätes des Teilnehmers an das Festnetz über Home Base Stationen (HBS) erfolgt.

8. Verfahren nach einem der Ansprüche 1 bis 7, **dadurch gekennzeichnet, daß** der Anschluß des Endgerätes des Teilnehmers an das Festnetz über eine Schnurlos-Basisstation (DECT) erfolgt.

9. Verfahren nach einem der Ansprüche 1 bis 8, **dadurch gekennzeichnet, daß** beim Einbuchen über das Festnetz über die MAP Signalisierung der Aufenthaltsort des Teilnehmers an die Heimatdatenbank (HDB) übermittelt und dort registriert wird.

10. Verfahren zum Anschluß von Teilnehmern in mehreren Telekommunikationsnetzen unter einer Rufnummer, wobei mindestens eines der Telekommunikationsnetze ein Mobilfunknetz mit Mobilitätsmanagementfunktion, z.B. ein GSM-Mobilfunknetz, und mindestens ein weiteres Telekommunikationsnetz ein digitales, Intelligentes Festnetz ist,
**dadurch gekennzeichnet,**
**daß** die Teilnehmerdaten in einer gemeinsamen Heimatdatenbank (HDB) in mindestens einem der Telekommunikationsnetze abgespeichert und verwaltet werden und auf Anfrage den anderen Telekommunikationsnetzen zur Verfügung gestellt werden, wobei die Heimatdatenbank (HDB) als ein Dienstedatenbank-Knoten (SDP) realisiert ist, der die Aufgaben einer Heimatdatenbank-Funktion (HLF) und einer Dienstesteuerungsfunktion (SCF) übernimmt.

11. Anordnung zum Anschluß von Teilnehmern in mehreren Telekommunikationsnetzen unter einer Rufnummer, wobei mindestens eines der Telekommunikationsnetze ein Mobilfunknetz mit Mobilitätsmanagementfunktion, z.B. ein GSM-Mobilfunknetz, und mindestens ein weiteres Telekommunikationsnetz ein digitales, Intelligentes Festnetz ist,
**dadurch gekennzeichnet,**
**daß** für die mehreren Telekommunikationsnetze mindestens eine gemeinsame Heimatdatenbank (HDB) in mindestens einem der Telekommunikationsnetze vorgesehen ist, wobei die Heimatdatenbank (HDB) aus zwei getrennten Knoten besteht, dem Heimatregister (HLR) des Mobilfunknetzes und einem Intelligenten Netzwerksystem (INS).

12. Anordnung nach Anspruch 11, **dadurch gekennzeichnet, daß** in Vermittlungsstellen der Telekommunikationsnetze jeweils eine Besucherdatenbank (VDB) angeordnet ist, die mit der Heimatdatenbank (HDB) kommuniziert, und in der relevante Teile der Teilnehmerdaten temporär verwaltet werden.

13. Anordnung zum Anschluß von Teilnehmern in mehreren Telekommunikationsnetzen unter einer Rufnummer, wobei mindestens eines der Telekommunikationsnetze ein Mobilfunknetz mit Mobilitätsmanagementfunktion, z.B. ein GSM-Mobilfunknetz, und mindestens ein weiteres Telekommunikationsnetz ein digitales, Intelligentes Festnetz ist,
**dadurch gekennzeichnet,**
**daß** für die mehreren Telekommunikationsnetze mindestens eine gemeinsame Heimatdatenbank (HDB) in mindestens einem der Telekommunikationsnetze vorgesehen ist, wobei die Heimatdatenbank (HDB) als ein Dienstedatenbank-Knoten (SDP) realisiert ist, der eine Heimatdatenbank-Funktion (HLF) und eine Dienstesteuerungsfunktion (SCF) beinhaltet.

14. Anordnung nach einem der Ansprüche 11 bis 13, **dadurch gekennzeichnet, daß** als Telekommunikationsgerät ein Mobilendgerät verwendet wird, welches nur den GSM-Standard oder, als sogenanntes Dual-Mode-Endgerät, den GSM-Standard und den DECT-Standard unterstützt.

## Claims

1. Method for the connection of subscribers in several telecommunications networks under one telephone number, wherein at least one of the telecommunications networks is a mobile telephone network with mobility management function, e.g. a GSM mobile telephone network, and at least one further telecommunications network is a digital, intelligent landline network, **characterised in that** the subscriber data are stored and managed in a common home data base (HDB) in at least one of the telecommunications networks and made available to the other telecommunications networks on request, wherein the home data base (HDB) assumes the functions of a home location register (HLR) and an intelligent network system (INS).

2. Method according to claim 1, **characterised in that** the home location register (HLR) and the intelligent network system (INS) are not coupled to each other and assume separate functions and both of them communicate via a MAP interface both with the exchanges (mobile SSP) of the mobile telephone network and with the exchanges (mobile local exchanges) of the landline network.

3. Method according to claim 1 or 2, **characterised in that** the subscriber profile of the home location register (HLR) and the visitor location register (VLR) of the mobile telephone network are expanded in such a way that the available services of the landline network are reproducible.

4. Method according to one of claims 1 to 3, **characterised in that** signalling between the terminals and the exchanges (mobile local exchanges) of the landline network is effected via a control channel (digital signal channel) expanded by mobility functions (α interface).

5. Method according to one of claims 1 to 4, **characterised in that** the functions of mobility management of the mobile telephone network are extended to the landline network.

6. Method according to one of claims 1 to 5, **characterised in that** MAP implementation is effected with interworking to the α-interface in the exchanges (mobile local exchanges).

7. Method according to one of claims 1 to 6, **characterised in that** connection of the terminal of the subscriber to the landline network is effected via home base stations (HBS).

8. Method according to one of claims 1 to 7, **characterised in that** connection of the terminal of the subscriber to the landline network is effected via a cordless base station (DECT).

9. Method according to one of claims 1 to 8, **characterised in that**, when logging on via the landline network by MAP signalling, the location of the subscriber is transmitted to the home data base (HDB) and registered there.

10. Method for the connection of subscribers in several telecommunications networks under one telephone number, wherein at least one of the telecommunications networks is a mobile telephone network with mobility management function, e.g. a GSM mobile telephone network, and at least one further telecommunications network is a digital, intelligent landline network, **characterised in that** the subscriber data are stored and managed in a common home data base (HDB) in at least one of the telecommunications networks and made available to the other telecommunications networks on request, wherein the home data base (HDB) is constructed as a service data point (SDP) which assumes the functions of a home data base function (HLF) and a service control function (SCF).

11. Arrangement for the connection of subscribers in several telecommunications networks under one telephone number, wherein at least one of the telecommunications networks is a mobile telephone network with mobility management function, e.g. a GSM mobile telephone network, and at least one further telecommunications network is a digital, intelligent landline network, **characterised in that**, for the plurality of telecommunications networks, at least one common home data base (HDB) is provided in at least one of the telecommunications networks, wherein the home data base (HDB) consists of two separate nodes, the home location register (HLR) of the mobile telephone network and an intelligent network system (INS).

12. Arrangement according to claim 11, **characterised in that** in exchanges of the telecommunications networks is arranged in each case a visitor data base (VDB) which communicates with the home data base (HDB), and in which relevant parts of the subscriber data are managed temporarily.

13. Arrangement for the connection of subscribers in several telecommunications networks under one telephone number, wherein at least one of the telecommunications networks is a mobile telephone network with mobility management function, e.g. a GSM mobile telephone network, and at least one further telecommunications network is a digital, intelligent landline network, **characterised in that**, for the plurality of telecommunications networks, at least one common home data base (HDB) is provided in at least one of the telecommunications networks, wherein the home data base (HDB) is constructed as a service data point (SDP) which contains a home data base function (HLF) and a service control function (SCF).

14. Arrangement according to one of claims 11 to 13, **characterised in that** a mobile terminal which supports only the GSM standard or, as a so-called dual-mode terminal, the GSM standard and the DECT standard is used as the telecommunications device.

## Revendications

1. Procédé pour joindre à un même numéro d'appel des abonnés dans plusieurs réseaux de télécommunication, l'un au moins des réseaux de télécommunication étant un réseau mobile avec une fonction de gestion de mobilité, par exemple un réseau mobile GSM, et au moins un autre réseau de télécommunication étant un réseau fixe numérique et intelligent,
**caractérisé en ce que** les données d'abonnés sont stockées et gérées dans un fichier d'abonnés (HDB) commun dans l'un au moins des réseaux de télécommunication et sont mises à la disposition des autres réseaux de télécommunication sur demande, le fichier d'abonnés (HDB) remplissant les tâches d'un enregistreur de localisation nominal (HLR) et d'un système de réseau intelligent (INS).

2. Procédé selon la revendication 1, **caractérisé en ce que** l'enregistreur de localisation nominal (HLR) et le système de réseau intelligent (INS) ne sont pas couplés, ils assurent des fonctions distinctes et ils communiquent tous les deux aussi bien avec les centres de commutation (M-SSP) du réseau mobile qu'avec les centres de commutation (M-TVSt) du réseau fixe par l'intermédiaire d'une interface MAP.

3. Procédé selon la revendication 1 ou 2,
**caractérisé en ce que** le profil d'abonné de l'enregistreur de localisation nominal (HLR) et des enregistreurs de localisation visités (VLR) du réseau mobile est élargi de telle sorte que les services existants du réseau mobile puissent être représentés.

4. Procédé selon l'une des revendications 1 à 3, **caractérisé en ce que** la signalisation entre les terminaux et les centres de commutation (M-TVSt) du réseau fixe se fait par l'intermédiaire d'un canal de commande (canal D) complété par des fonctions de mobilité (interface α).

5. Procédé selon l'une des revendications 1 à 4, **caractérisé en ce que** les fonctions de la gestion de mobilité du réseau mobile sont étendues au réseau fixe.

6. Procédé selon l'une des revendications 1 à 5, **caractérisé en ce qu'**une mise en application MAP a lieu avec un interfonctionnement avec l'interface α dans les centres de commutation (M-TVSt) du réseau fixe.

7. Procédé selon l'une des revendications 1 à 6, **caractérisé en ce que** le raccordement du terminal de l'abonné au réseau fixe se fait par l'intermédiaire de stations de base d'attache (HBS).

8. Procédé selon l'une des revendications 1 à 7, **caractérisé en ce que** le raccordement du terminal de l'abonné au réseau fixe se fait par l'intermédiaire d'une station de base sans fil (DECT).

9. Procédé selon l'une des revendications 1 à 8, **caractérisé en ce que** lors de l'enregistrement par l'intermédiaire du réseau fixe grâce à la signalisation MAP la position de l'abonné est transmise au fichier d'abonnés (HDB) et enregistrée dans celui-ci.

10. Procédé pour joindre à un même numéro d'appel des abonnés dans plusieurs réseaux de télécommunication, l'un au moins des réseaux de télécommunication étant un réseau mobile avec une fonction de gestion de mobilité, par exemple un réseau mobile GSM, et au moins un autre réseau de télécommunication étant un réseau fixe numérique et intelligent,
**caractérisé en ce que** les données d'abonnés sont stockées et gérées dans un fichier d'abonnés (HDB) commun dans l'un au moins des réseaux de télécommunication et sont mises à la disposition des autres réseaux de télécommunication sur demande, le fichier d'abonnés (HDB) étant réalisé sous la forme d'un point de données de service (SDP) qui assure les tâches d'une fonction de localisation nominale (HLF) et d'une fonction de commande de service (SCF).

11. Dispositif pour joindre à un même numéro d'appel des abonnés dans plusieurs réseaux de télécommunication, l'un au moins des réseaux de télécommunication étant un réseau mobile avec une fonction de gestion de mobilité, par exemple un réseau mobile GSM, et au moins un autre réseau de télécommunication étant un réseau fixe numérique et intelligent,
**caractérisé en ce que** pour les réseaux de télécommunication, il est prévu au moins un fichier d'abonnés (HDB) commun dans l'un au moins des réseaux de télécommunication, ce fichier d'abonnés (HDB) se composant de deux noeuds séparés: l'enregistreur de localisation nominal (HLR) du réseau mobile et un système de réseau intelligent (INS).

12. Dispositif selon la revendication 11, **caractérisé en ce qu'**il est prévu dans chacun des centres de commutation des réseaux de télécommunication une banque de données de visiteurs (VDB) qui communique avec le fichier d'abonnés (HDB) et dans laquelle les parties significatives des données d'abonnés sont gérées temporairement.

13. Dispositif pour joindre à un même numéro d'appel des abonnés dans plusieurs réseaux de télécommunication, l'un au moins des réseaux de télécommunication étant un réseau mobile avec une fonction de gestion de mobilité, par exemple un réseau mobile GSM, et au moins un autre réseau de télécommunication étant un réseau fixe numérique et intelligent,
**caractérisé en ce que** pour les réseaux de télécommunication, il est prévu au moins un fichier d'abonnés (HDB) commun dans l'un au moins des réseaux de télécommunication, le fichier d'abonnés (HDB) étant réalisé sous la forme d'un point de données de service (SDP) qui contient une fonction de localisation nominale (HLF) et une fonction de commande de service (SCF).

14. Dispositif selon l'une des revendications 11 à 13, **caractérisé en ce qu'**on utilise comme appareil de télécommunication un terminal mobile qui supporte uniquement la norme GSM ou bien, sous la forme de ce qu'on appelle un terminal à double mode, la norme GSM et la norme DECT.
